(19) Europäisches Patentamt
European Patent Office
Office européen des brevets

(11) **EP 4 674 615 A1**

(12) **EUROPEAN PATENT APPLICATION**
published in accordance with Art. 153(4) EPC

(43) Date of publication:
**07.01.2026  Bulletin 2026/02**

(21) Application number: **24763786.1**

(22) Date of filing: **22.02.2024**

(51) International Patent Classification (IPC):
***B32B 7/022*** (2019.01)     ***B32B 27/30*** (2006.01)
***B32B 27/40*** (2006.01)     ***B44C 1/17*** (2006.01)

(52) Cooperative Patent Classification (CPC):
**B32B 7/022; B32B 27/30; B32B 27/40; B44C 1/17;
C09J 7/30; C09J 201/00**

(86) International application number:
**PCT/JP2024/006543**

(87) International publication number:
**WO 2024/181305 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023  JP 2023030228**

(71) Applicant: **Dai Nippon Printing Co., Ltd.
Tokyo 162-8001 (JP)**

(72) Inventors:
• **MIYAZAKI, Saori
Tokyo 162-8001 (JP)**
• **AKITA, Yasuhiro
Tokyo 162-8001 (JP)**
• **KAWASAKI, Keishi
Tokyo 162-8001 (JP)**
• **NAKAMURA, Katsuji
Tokyo 162-8001 (JP)**
• **WATANABE, Osamu
Tokyo 162-8001 (JP)**

(74) Representative: **Müller-Boré & Partner
Patentanwälte PartG mbB
Friedenheimer Brücke 21
80639 München (DE)**

(54) **TRANSFER SHEET, METHOD FOR PRODUCING TRANSFER SHEET, METHOD FOR PRODUCING OUTER PACKAGE MEMBER, AND OUTER PACKAGE MEMBER**

(57)     The present disclosure provides a transfer sheet used for producing an exterior member, the transfer sheet comprising: a releasing film, and a transfer layer disposed on one surface of the releasing film, wherein the transfer layer includes a first protective layer and a second protective layer, in this order from the releasing film side, in a thickness direction; the first protective layer includes a cured product of a first curable resin composition, and a weather resistant agent; the second protective layer includes a cured product of a second curable resin composition, and a weather resistant agent; the cured product of the first curable resin composition and the cured product of the second curable resin composition respectively include a (meth)acrylic component, and a urethane component; and when a cross-sectional sample piece of the transfer sheet is prepared using a resin embedding method and a microtome, an indentation hardness at a cross-section of the first protective layer is 150 MPa or more and 300 MPa or less, and an indentation hardness at a cross-section of the second protective layer is 2 MPa or more and 50 MPa or less.

**(Cont. next page)**

FIG. 1

(a)

(b)

(c)

(d)

**Description**

Technical Field

The present disclosure relates to a transfer sheet, a method for producing a transfer sheet, a method for producing an exterior member, and an exterior member.

Background Art

It is known to decorate a base body by transferring a transfer layer (a layer transferred from a transfer sheet) in a transfer sheet to a base body such as a metal member and a resin member. For example, Patent Document 1 discloses a design transfer sheet comprising a release layer and a design transfer layer releasably attached to the release layer, wherein the design transfer layer comprises a first surface layer that is heat-sealable, and a second surface layer that is heat-sealable, in this order from the release layer side.

Citation List

Patent Document

Patent Document 1: Japanese Patent Application Laid-Open (JP-A) No. 2016-120643

Summary of Disclosure

Technical Problem

The transfer sheet includes, for example, a releasing film, a first protective layer, and a second protective layer, in this order in the thickness direction. In such a transfer sheet, the close adhesiveness of the first protective layer and the second protective layer tends to be insufficient. The first protective layer is typically produced by curing a composition for forming a first protective layer on the releasing film. Since the second protective layer is formed on the cured first protective layer, the close adhesiveness of the first protective layer and the second protective layer tends to be insufficient. In addition, since an exterior member (a member for outdoor use) is exposed to a severe environment, the first protective layer and the second protective layer, which constitute the transfer layer in the transfer sheet used for producing the exterior member, are required not only to have good initial close adhesiveness but also to have good weather resistant close adhesiveness. In addition, the transfer sheet is required to have scratch resistance on the surface of the transfer layer transferred to the base body.

The present disclosure has been made in view of the above circumstances, and a main object is to provide a transfer sheet capable of transferring a transfer layer having excellent scratch resistance and good weather resistant close adhesiveness between the first protective layer and the second protective layer.

Solution to Problem

The present disclosure provides a transfer sheet used for producing an exterior member, the transfer sheet comprising: a releasing film, and a transfer layer disposed on one surface of the releasing film, wherein the transfer layer includes a first protective layer and a second protective layer, in this order from the releasing film side, in a thickness direction; the first protective layer includes a cured product of a first curable resin composition, and a weather resistant agent; the second protective layer includes a cured product of a second curable resin composition, and a weather resistant agent; the cured product of the first curable resin composition and the cured product of the second curable resin composition respectively include a (meth)acrylic component, and a urethane component; and when a cross-sectional sample piece of the transfer sheet is prepared using a resin embedding method and a microtome, an indentation hardness at a cross-section of the first protective layer is 150 MPa or more and 300 MPa or less, and an indentation hardness at a cross-section of the second protective layer is 2 MPa or more and 50 MPa or less.

Also, the present disclosure provides a method for producing the above transfer sheet, the method comprising: a first protective layer forming step of forming the first protective layer by coating a surface of the releasing film with a first composition including the first curable resin composition and the weather resistant agent, and curing; and a second protective layer forming step of forming the second protective layer by coating a surface of the first protective layer that is opposite side to the releasing film with a second composition including the second curable resin composition and the weather resistant agent, and curing.

Also, the present disclosure provides a method for producing an exterior member, the method comprising: a preparing step of preparing the above transfer sheet; and a close adhering step of facing the second protective layer side surface of the transfer sheet and a base body, and closely adhering the two.

Also, the present disclosure provides an exterior member comprising a first protective layer, a second protective layer, an adhesive layer and a base body, in this order in a thickness direction, wherein the first protective layer includes a cured product of a first curable resin composition, and a weather resistant agent; the second protective layer includes a cured product of a second curable resin composition, and a weather resistant agent; the cured product of the first curable resin composition and the cured product of the second curable resin composition respectively include a (meth)acrylic component, and a urethane component; and when a cross-sectional sample piece of the exterior member is prepared using a resin embedding method and a microtome, an indentation hardness at a cross-section of the first protective layer is 150 MPa or more and 300 MPa or less, and an indentation hardness at a cross-section of the second protective layer is 2 MPa or more and 50 MPa or less.

Advantageous Effects of Disclosure

The present disclosure exhibits effects that it is possible to provide a transfer sheet capable of transferring a transfer layer having excellent scratch resistance and good weather resistant close adhesiveness between the first protective layer and the second protective layer.

Brief Description of Drawings

[FIGS. 1] are schematic cross-sectional views exemplifying the transfer sheet in the present disclosure.
[FIGS. 2] are schematic cross-sectional views exemplifying the method for producing a transfer sheet in the present disclosure.
[FIGS. 3] are schematic cross-sectional views exemplifying the method for producing an exterior member in the present disclosure.
[FIGS. 4] are schematic cross-sectional views exemplifying the exterior member in the present disclosure.

Description of Embodiments

Embodiments are hereinafter explained with reference to, for example, drawings. However, the present disclosure is enforceable in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure.

In the present descriptions, in expressing an aspect wherein some member is placed on the other member, when described as merely "above" or "below", unless otherwise stated, it includes both of the following cases: a case wherein some member is placed directly on or directly below the other member so as to be in contact with the other member, and a case wherein some member is placed on the upper side or the lower side of the other member via yet another member. Also, in the present descriptions, on the occasion of expressing an aspect wherein some member is placed on the surface of the other member, when described as merely "on the surface", unless otherwise stated, it includes both of the following cases: a case wherein some member is placed directly on or directly below the other member so as to be in contact with the other member, and a case wherein some member is placed on the upper side or the lower side of the other member via yet another member.

The transfer sheet, the method for producing a transfer sheet, the method for producing an exterior member, and the exterior member in the present disclosure are hereinafter described.

A. Transfer sheet

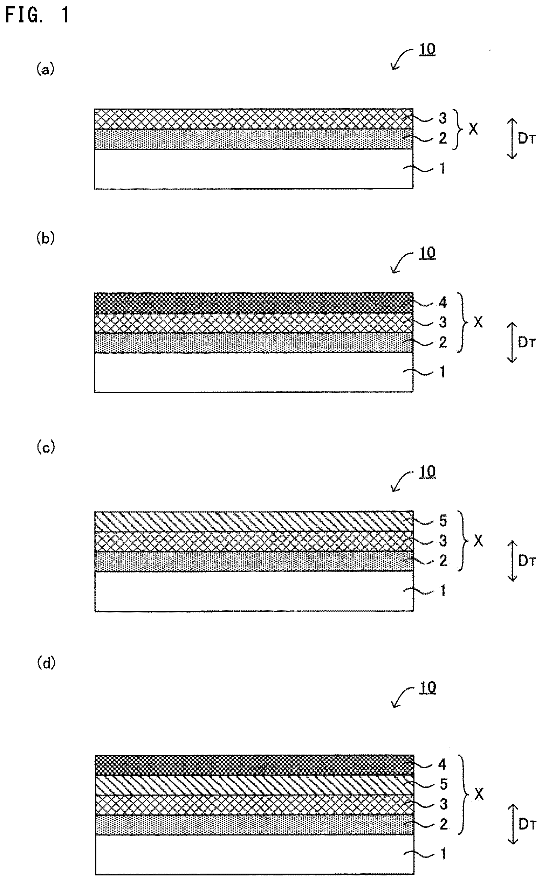

FIG. 1(a) is a schematic cross-sectional view exemplifying the transfer sheet in the present disclosure. As shown in FIG. 1(a), the transfer sheet 10 comprises a releasing film 1, and a transfer layer X disposed on one surface of the releasing film 1. The transfer layer X includes a first protective layer 2, and a second protective layer 3, in this order, in a thickness direction $D_T$. Also, as shown in FIG. 1(b), the transfer sheet 10 may include an adhesive layer 4 on the surface of the second protective layer 3 that is opposite side to the first protective layer 2. Also, as shown in FIG. 1(c), the transfer sheet 10 may include a design layer 5 on the surface of the second protective layer 3 that is opposite side to the first protective layer 2. Also, as shown in FIG. 1(d), the transfer sheet 10 may include an adhesive layer 4 on the surface of the design layer 5 that is opposite side to the second protective layer 3.

In the transfer sheet in the present disclosure, the first protective layer 2 includes a cured product of a predetermined first curable resin composition, and a weather resistant agent, and an indentation hardness thereof in a cross-section of a cross-sectional sample piece of the transfer sheet produced by a predetermined method is in a predetermined range. Further, the second protective layer 3 includes a cured product of a predetermined second curable resin composition, and a weather resistant agent, and an indentation hardness thereof in the cross-section of the cross-sectional sample piece of the transfer sheet produced by a predetermined method is in a predetermined range. According to the present disclosure, a transfer sheet for an exterior member has excellent weather resistant close adhesiveness and scratch resistance.

As described above, the close adhesiveness between the first protective layer and the second protective layer in the transfer sheet tends to be insufficient. Here, in the case of a decorative sheet, a design layer is usually formed on a substrate layer, then a second protective layer is formed on the design layer, and then, a first protective layer is formed on the second protective layer. Since the first protective layer is typically produced by curing a composition for forming a first protective layer formed on the second protective layer, the close adhesiveness between the first protective layer and the second protective layer is good. Meanwhile, typically, in the case of a transfer sheet, a first protective layer is formed on a releasing film, then, a second protective layer is formed on the first protective layer, and then, a design layer is formed on the second protective layer. The first protective layer is typically produced by curing a composition for forming a first protective layer on the releasing film. Since the second protective layer is formed on that cured first protective layer, the close adhesiveness of the first protective layer and the second protective layer tends to be insufficient.

Since good scratch resistance is required for the first protective layer, the flexibility of the first protective layer is preferably low. Also, the inventors of the present application have found that the second protective layer needs a certain degree of flexibility in order to adhere to the cured first protective layer (initial close adhesiveness and weather resistant close adhesiveness). Furthermore, it has been found that the first protective layer cannot follow the second protective layer in an environment wherein a temperature change such as a temperature difference between day and night and a temperature difference due to seasons is repeated, and thus the weather resistance may deteriorate.

The present inventors have found that an indentation hardness obtained by measuring a cross-sectional sample piece of a transfer sheet produced by using a resin embedding method and a microtome can more accurately evaluate the flexibility of a layer as compared with an indentation hardness obtained by measuring a cross-sectional sample piece produced by mechanical polishing. Then, the present inventors have found that, in the case where the cross-sectional sample piece of a transfer sheet is manufactured using the resin embedding method and the microtome, the indentation hardness at a cross-section of the first protective layer is in a predetermined range, and the indentation hardness at a cross-section of the second protective layer is in a predetermined range, thereby providing a transfer sheet capable of transferring a transfer layer having excellent scratch resistance and good weather resistant close adhesiveness between the first protective layer and the second protective layer.

Also, higher weather resistance is required to exterior members (members for outdoor use) than interior members (members for indoor use). For example, when a decorative sheet is used to produce an exterior member, a transparent resin layer may be provided in the decorative sheet, in some cases, in order to improve the strength. In this case, since the transparent resin layer is a relatively thick layer, high weather resistance is imparted by, for example, adding a sufficient amount of the weather resistant agent to the transparent resin layer. Meanwhile, it is technically difficult to impart high weather resistance to a transfer sheet that do not include a layer corresponding to a transparent resin layer. In the present disclosure, the first protective layer and the second protective layer usually include a weather resistant agent. As a result, it is possible to impart high weather resistance while maintaining the properties required for the first protective layer (for example, surface properties such as scratch resistance and abrasion resistance) and the properties required for the second protective layer (for example, close adhesiveness).

1. First protective layer

The transfer sheet in the present disclosure includes a first protective layer. The first protective layer contributes to the improvement of the surface properties of the exterior member (for example, scratch resistance and abrasion resistance). The first protective layer and the releasing film are preferably disposed so as to be in direct contact.

(1) Indentation hardness

In the present disclosure, when a cross-sectional sample piece of a transfer sheet is prepared using a resin embedding method and a microtome, an indentation hardness at a cross-section of the first protective layer is usually 150 MPa or more, may be 180 MPa or more, and may be 190 MPa or more. When the indentation hardness at the cross-section of the first protective layer is low, excellent scratch resistance and abrasion resistance may not be obtained. Meanwhile, the indentation hardness at the cross-section of the first protective layer is, usually 300 MPa or less, may be 280 MPa or less, and may be 250 MPa or less. When the indentation hardness at the cross-section of the first protective layer is high, the following ability of the first protective layer with respect to the second protective layer decreases, and good weather resistant close adhesiveness may not be obtained.

The indentation hardness in the cross-section of the first protective layer can be adjusted by, for example, the number of functional groups of the curable resin in the first curable resin composition for producing the first protective layer. For example, by reducing the number of functional groups of an ionizing radiation curable compound, the cross-linking point can be reduced in the cured product of the first curable resin composition, so that the structure can be made more flexible and the indentation hardness can be lowered.

The indentation hardness at the cross-section of the first protective layer is a value obtained by measuring the cross-sectional sample piece prepared using a resin embedding method and microtome, with the following method for measuring an indentation hardness.

(Preparation of cross-sectional sample piece for measurement)

A cut sample is prepared by cutting the transfer sheet into an arbitrary size. An embedded sample, wherein the cut sample is embedded in a resin, is prepared by embedding the cut sample into resin (ordinary temperature curing type 2-component epoxy curable resin), and leaving it at room temperature for 24 hours or more to cure (resin embedding method). The embedded sample is cut vertically using a microtome to prepared a cross-sectional sample piece for measuring an indentation hardness wherein the cross-section of the layer to be measured is exposed. Specifically, using an ultramicrotome (Leica EM UC6 from Leica Microsystems) and a diamond knife equipped with a frozen cutting system (Leica EM FC6 from Leica Microsystems), in an environment of -120°C, to produce a cross-section exposed a cross-section of the layer to be measured. As compared with the cross-sectional cut in the room temperature environment, the cross-sectional roughness can be suppressed, and the cross-section suitable for the indentation test can be obtained. In particular, in the case of a soft material, the cross-sectional roughness can be suppressed.

(Method for measuring indentation hardness)

The "indentation hardness" in the present specification is measured by a nanoindentation method. The nanoindentation method is a method wherein a dynamic quantity is calculated from the load-displacement curve obtained by continuously measuring the load and displacement during the process of pushing-in and unloading an indenter onto the sample surface.

Specifically, using the following nanoindenter, the indentation hardness of the first protective layer is measured by pressing a Berkovich indenter (material: a triangular pyramid diamond) vertically onto the cutting surface of the above sample piece. The measurement device and conditions are as follows. Here, the position where the Berkovich indenter is pressed is preferably an approximate center, in the thickness direction, of the first protective layer. The approximate center means that, when the thickness of the first protective layer is defined as $T$ [μm], the deviation from the center in the thickness direction of the first protective layer is within $\pm$ 0.1T. Also, when the layer includes particulates such as fillers (for example, silica), a Berkovich indenter is pushed-in into a position away from the particulates.

- Used device: nanoindenter (TI 950 TriboIndenter from BRUKER Corporation)
- Used indenter: a Berkovich indenter (model number: TI-0039 from BRUKER Corporation)
- Method for controlling push-in: displacement controlling method (without lifting operation)
- Maximum push-in depth: 100 nm
- Push-in rate: 10 nm/second
- Loading time: 10 seconds (push-in from 0 to 100 nm)
- Retention time: 5 seconds (constant at 100 nm)
- Unloading time: 10 seconds (releasing from 100 nm to 0)
- Number of measurements: 5 times

The indentation hardness of the cross-section of the first protective layer can be calculated as follows. Firstly, a load-displacement curve is prepared by continuously measuring the press-in depth $h$ (nm) corresponding to the press-in load $P$ (N). By analyzing the prepared load-displacement curve, the indentation hardness $H_{IT}$ can be calculated as a value obtained by dividing the maximum press-in load $P_{max}$ (N) by the projection area $A$ (mm$^2$) where the indenter and the first protective layer are in contact with each other at that time (following formula (1)).

$$H_{IT} = P_{max}/A \qquad \ldots (1)$$

Here, A is a contact projection area wherein the indenter tip shape is corrected by a standard method for the device, using a standard sample fused quartz.

In the present specification, the indentation hardness at the cross-section of the first protective layer is measured for five times, repositioning within the same sample, and the arithmetic average of these values is employed. Incidentally, each measurement was carried out by displacing for 5 μm or more. When measuring, in order to confirm that the indenter shape is corrected accurately and that there are no problems with the operation of the device and measurement, it is preferable to confirm that the measurement is carried out within ± 5% of the reference value, using fused quartz, which is the standard sample of the device manufacturer. Also, the atmosphere for measuring indentation hardness is at temperature of 23°C ± 5°C and humidity of 40% to 65%.

(2) Resin component

The first protective layer includes a cured product (cross-linked structure) of a first curable resin composition. Also, the cured product of the first curable resin composition includes a (meth)acrylic component, and a urethane component. The (meth)acrylic component means acrylic component or methacrylic component. The urethane component refers to urethane bonding. Also, the ratio of the cured product of the first curable resin composition is, for example, 70% by mass or more, may be 90% by mass or more, may be 95% by mass or more, and may be 100% by mass, with respect to all the resin components constituting the first protective layer.

Examples of the first curable resin composition may include an ionizing radiation curable resin composition and a thermosetting resin composition. Examples of the ionizing radiation curable resin composition may include an electron beam curable resin composition, and an ultraviolet ray curable resin composition. Among them, the electron beam curable resin composition is preferred because of less odor since a polymerization initiator is not necessary, and coloring is less likely to occur.

The ionizing radiation curable resin composition is a composition including a compound having an ionizing radiation curable functional group (hereinafter, it may be referred to as "ionizing radiation curable compound"). The ionizing radiation curable functional group is a group cross-linked due to an irradiation of ionizing radiation. The ionizing radiation curable resin composition preferably includes at least a compound including a (meth)acryloyl group. The (meth) acryloyl group refers to an acryloyl group or a methacryloyl group. Also, in addition to the compound including the (meth) acryloyl group, the ionizing radiation curable resin composition may include a compound including a group including an ethylenically double bonds such as a vinyl group, and an allyl group.

The number of the functional groups of the ionizing radiation curable compound is preferably 2 or more and 20 or less, more preferably 2 or more and 18 or less, and further preferably 2 or more and 15 or less. This is because it is easy to adjust the indentation hardness of the first protective layer to the above range.

The "ionizing radiation" refers to, among electromagnetic waves and charged particle beams, one having energy quantum capable of polymerizing or cross-linking molecules. Examples of the ionizing radiation may include electron beam (EB), and ultraviolet ray (UV). Also, other Examples of the ionizing radiation may include electromagnetic wave such as X-ray and γ-ray; and charged particle beam such as α-ray and ion ray.

Among them, the ionizing radiation curable resin composition preferably includes at least a urethane (meth) acrylate as the ionizing radiation curable compound. The (meth)acrylate refers to an acrylate or a methacrylate. Also, in addition to the urethane (meth)acrylate, the ionizing radiation curable resin composition may further include at least one kind of an epoxy (meth)acrylate, a polyester (meth)acrylate, a polyether (meth)acrylate, a polycarbonate (meth)acrylate, and an acrylic (meth)acrylate.

The ionizing radiation curable resin composition preferably includes a caprolactone based urethane (meth) acrylate as the urethane (meth)acrylate. Also, the ionizing radiation curable resin composition may include a caprolactone based urethane (meth)acrylate and a urethane (meth)acrylate that is not modified by caprolactone. In this case, the content of the caprolactone based urethane (meth)acrylate included in the first protective layer is regarded as $M_{CLUA}$, and the content of urethane (meth)acrylate that is not modified by caprolactone included in the first protective layer is regarded as $M_{UA}$. The mass ratio ($M_{CLUA}$ / ($M_{UA}$ + $M_{CLUA}$) ) of $M_{CLUA}$ with respect to the total of $M_{UA}$ and $M_{CLUA}$ is, for example, 10% by mass or more and 90% by mass or less, may be 20% by mass or more and 80% by mass or less, and may be 30% by mass or more and 70% by mass or less.

When the ionizing radiation curable compound includes the caprolactone based urethane (meth)acrylate, the number of the functional group of the caprolactone based urethane (meth)acrylate is preferably 2 or more and 9 or less, and more preferably 2 or more and 5 or less. By setting the number of the functional groups of the caprolactone based urethane (meth)acrylate, it is easy to adjust the indentation hardness of the cross-section of the first protective layer to the above range.

The caprolactone based urethane (meth)acrylate can usually be obtained by the reaction of a caprolactone based polyol, an organic isocyanate, and a hydroxy (meth)acrylate. Examples of the method for synthesizing may include a method wherein a polycaprolactone based polyol and an organic polyisocyanate are reacted to produce a polyurethane prepolymer including -NCO group (isocyanato group) at both ends, and then, reacted with a hydroxy (meth)acrylate.

Commercially available caprolactone based polyols can be used, preferably with two hydroxyl groups, and with the number average molecular weight of preferably 500 to 3000, and more preferably 750 to 2000. Also, a polyol other than the caprolactone based, for example, one kind or a plurality of polyols such as ethylene glycol, diethylene glycol, 1,4-butanediol, and 1,6-hexanediol, can be mixed and used in any proportion. As the organic polyisocyanates, diisocyanates with two isocyanate groups are preferable, and from the viewpoint of suppressing yellowing, preferable examples may include isophorone diisocyanate, hexamethylene diisocyanate, 4,4'-dicyclohexylmethane diisocyanate, trimethylhexamethylene diisocyanate. Preferable examples of the hydroxy (meth)acrylate may include 2-hydroxyethyl acrylate, 2-hydroxypropyl acrylate, and caprolactone-modified-2-hydroxyethyl acrylate.

When using the caprolactone based polyol, the caprolactone based urethane (meth)acrylate is preferably a caprolactone diol based urethane (meth)acrylate. The caprolactone diol based urethane (meth)acrylate refers to urethane (meth)acrylate whose terminal is diethylene glycol, among caprolactone based urethane (meth)acrylates. By using the caprolactone diol based urethane (meth)acrylate, cracking and bleaching can be suppressed in the first protective layer.

The number average molecular weight of the ionizing radiation curable compound is, for example, 1000 or more and 10000 or less, and may be 2000 or more and 10000 or less. The number average molecular weight is the average molecular weight measured by GPC analysis, and converted to standard polystyrene.

For example, when the ionizing radiation curable compound is an ultraviolet ray curable compound, the ionizing radiation curable compound preferably includes at least one of a photopolymerization initiator and a photopolymerization accelerator. Examples of the photopolymerization initiator may include acetophenone, benzophenone, α-hydroxyalkylphenone, Michler's ketone, benzoin, benzyldimethylketal, benzoyl benzoate, α-acyloxime ester, acylphosphine oxide, and thioxanthones. Examples of the photopolymerization accelerator may include p-dimethylaminobenzoic acid isoamyl ester and p-dimethylaminobenzoic acid ethyl ester.

Also, the first curable resin composition may be a thermosetting resin composition. The details of the thermosetting resin composition are similar to those described in "2. Second protective layer" below.

(3) Weather resistant agent

The first protective layer usually includes a weather resistant agent. Examples of the weather resistant agent may include an ultraviolet absorber and a light stabilizer. The first protective layer preferably includes at least one of the ultraviolet absorber and the light stabilizer. The first protective layer may include one kind or two kinds or more of the ultraviolet absorbers. Similarly, the first protective layer may include one kind or two kinds or more of the light stabilizers.

Examples of the ultraviolet absorber included in the first protective layer may include organic based ultraviolet absorbers such as a triazine based ultraviolet absorber, a benzotriazole based ultraviolet absorber, a benzophenone based ultraviolet absorber, an oxybenzophenone based ultraviolet absorber, a salicylic acid ester based ultraviolet absorber, and a cyano(meth)acrylate based ultraviolet absorber; and inorganic based ultraviolet absorbers such as titanium dioxide, cerium oxide, and zinc oxide. Among these, the triazine based ultraviolet absorber is more preferable.

Examples of the triazine based ultraviolet absorber may include a hydroxyphenyltriazine based ultraviolet absorber. Examples of the hydroxyphenyltriazine based ultraviolet absorber may include 2-(2-hydroxy-4-[1-octyloxycarbonylethoxy]phenyl)-4,6-bis(4-phenylphenyl)-1,3,5-triazine, 2-[4-[(2-hydroxy-3-dodecyloxypropyl)oxy]-2-hydroxyphenyl]-4,6-bis(2,4-dimethylphenyl)-1,3,5-triazine, 2,4-bis[2-hydroxy-4-butoxyphenyl]-6-(2,4-dibutoxyphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, and 2-(4,6-diphenyl-1,3,5-triazine-2-yl)-5[2-(2-ethylhexanoyloxy)ethoxy]phenol.

The content of the ultraviolet absorber included in the first protective layer is, for example, 0.5 parts by mass or more and 10 parts by mass or less, may be 0.8 part by mass or more and 8 parts by mass or less, and may be 1 part by mass or more and 5 parts by mass or less, with respect to 100 parts by mass of the ionizing radiation curable compound. When the content of the ultraviolet absorber is high, the ultraviolet absorber may bleed-out, and when the content of the ultraviolet absorber is low, sufficient ultraviolet absorbing property may not be obtained.

Examples of the light stabilizer included in the first protective layer may include a hindered amine based light stabilizer. Examples of the hindered amine based light stabilizer may include 1,2,2,6,6-pentamethyl-4-piperidinyl methacrylate, bis(1,2,2,6,6-pentamethyl-4-piperidyl)sebacate, bis(2,2,6,6-pentamethyl-4-piperidyl)sebacate, bis(1,2,2,6,6-pentamethyl-4-piperidinyl)sebacate, methyl(1,2,2,6,6-pentamethyl-4-piperidinyl)sebacate, and 2,4-bis[N-butyl-N-(1-cyclohexyloxy-2,2,6,6-tetramethylpiperidine-4-yl)amino]-6-(2-hydroxyethylamine)-1,3,5-triazine.

The content of the light stabilizer included in the first protective layer is, for example, 1 part by mass or more and 10 parts by mass or less, may be 1.5 part by mass or more and 8 parts by mass or less, and may be 2 parts by mass or more and 5 parts by mass or less, with respect to 100 parts by mass of the ionizing radiation curable compound. When the content of the light stabilizer is high, the light stabilizer may bleed-out, and when the content of the light stabilizer is low, sufficient light-stabilizing property may not be obtained.

(4) Additives

The first protective layer may include additives such as a silicone compound, a polymerization inhibitor, a cross-linking agent, an antistatic agent, an adhesiveness improving agent, an antioxidant, a leveling agent, a thixoactive agent, a coupling agent, a plasticizer, an antifouling agent, an antifoaming agent, a filling agent, an abrasion resistant agent, an antimicrobial, an antivirus agent and a fungicidal agent.

(5) First protective layer

The thickness of the first protective layer is, for example, 2 μm or more and 20 μm or less, may be 3 μm or more and 15 μm or less, and may be 4 μm or more and 10 μm or less. When the first protective layer is thin, sufficient weather resistance cannot be obtained, and when the first protective layer is thick, the first protective layer is more prone to cracking, and good close adhesiveness may not be obtained.

2. Second protective layer

The transfer sheet in the present disclosure includes a second protective layer. The second protective layer and the first protective layer may be disposed so as to be in direct contact, and may be disposed via another layer.

(1) Indentation hardness

In the present disclosure, when a cross-sectional sample piece of the transfer sheet is prepared using a resin embedding method and a microtome, an indentation hardness at a cross-section of the second protective layer is usually 2 MPa or more, may be 5 MPa or more, and may be 10 MPa or more. Meanwhile, the indentation hardness at the cross-section of the second protective layer is usually 50 MPa or less, may be 40 MPa or less, and may be 30 MPa or less. When the indentation hardness at the cross-section of the second protective layer is high, the close adhesiveness (particularly, initial close adhesiveness) with respect to the first protective layer may decrease. Incidentally, the method for preparing the cross-sectional sample piece of the transfer sheet and the method for measuring the indentation hardness at the cross-section of the second protective layer are similar to the methods described above for the first protective layer.

(2) Resin component

The second protective layer includes a cured product (cross-linked structure) of a second curable resin composition. Also, the cured product of the second curable resin composition includes a (meth)acrylic component, and a urethane component. Also, the ratio of the cured product of the second curable resin composition is, for example, 70 mass% or more, may be 90% by mass or more, may be 95% by mass or more, and may be 100% by mass, with respect to all the resin components constituting the second protective layer.

Examples of the second curable resin composition may include a thermosetting resin composition. The thermosetting resin composition is a composition including at least a thermosetting resin and is a composition cured by heating. The thermosetting resin composition preferably includes at least a urethane (meth)acrylic based resin as the thermosetting resin. In addition to the urethane (meth)acrylic based resin, the second curable resin composition may further include at least one kind of a (meth)acrylic based resin, a urethane based resin, a phenolic based resin, a urea melamine based resin, an epoxy based resin, an unsaturated polyester based resin, and a silicone based resin, as the thermosetting resin. Also, the thermosetting resin composition may further include a curing agent such as an isocyanate based curing agent and an epoxy based curing agent.

Also, when the second curable resin composition includes the urethane (meth)acrylic based resin, the urethane (meth)acrylic based resin is preferably a urethane (meth)acrylic copolymer, and more preferably a polycarbonate based urethane (meth)acrylic copolymer. The polycarbonate based urethane (meth)acrylic copolymer is a resin obtained by radical polymerization of a (meth)acrylic monomer and a polycarbonate based polyurethane polymer obtained by reacting a polycarbonate diol and a (di) isocyanate.

Examples of the (di)isocyanate may include aromatic isocyanates such as 4,4'-diphenylmethane diisocyanate, 2,4-tolylene diisocyanate, 1,5-naphthalene diisocyanate, n-isocyanate phenylsulfonylisocyanate, o-isocyanate phenylsulfonylisocyanate, and p-isocyanate phenylsulfonylisocyanate; aliphatic isocyanates such as 1,6-hexamethylene diisocyanate; and cycloaliphatic isocyanates such as isophorone diisocyanate, hydrogenated xylylene diisocyanate, and hydrogenated diphenylmethane diisocyanate.

Examples of the (meth)acrylic monomer may include alkyl (meth)acrylates such as (meth)acrylate, methyl (meth)acrylate, ethyl (meth)acrylate, n-propyl (meth)acrylate, isopropyl (meth)acrylate, n-butyl (meth)acrylate, and isobutyl (meth)acrylate.

The mass ratio ([urethane component]/([(meth)acrylic component] + [urethane component])) of the urethane component with respect to the total of the (meth)acrylic component and the urethane component in the polycarbonate based urethane (meth)acrylic copolymer is, for example, 65% by mass or more and 95% by mass or less, and may be 70% by mass or more and 90% by mass or less. By setting the mass ratio to 65% by mass or more, the proportion of a polycarbonate structure in the polycarbonate based urethane (meth)acrylic copolymer can be increased, making the structure of the polycarbonate based urethane acrylic copolymer more rigid. Therefore, the indentation hardness of the cross-section of the second protective layer can be adjusted to a predetermined value or more. Also, by setting the mass ratio to 95% by mass or less, the indentation hardness of the cross-section of the second protective layer can be adjusted to a predetermined value or less.

(3) Weather resistant agent

The second protective layer usually includes a weather resistant agent. Examples of the weather resistant agent may include an ultraviolet absorber and a light stabilizer. The second protective layer preferably includes at least one of the ultraviolet absorber and the light stabilizer. Since preferable kinds and embodiments of the weather resistant agent are similar to the contents described in "1. First protective layer" above, the description herein is omitted. Particularly, the second protective layer preferably includes a triazine based ultraviolet absorber. Also, the second protective layer preferably includes a hindered amine based light stabilizer.

The content of the ultraviolet absorber included in the second protective layer is, for example, 0.1 parts by mass or more and 50 parts by mass or less, may be 3 parts by mass or more and 40 parts by mass or less, and may be 10 parts by mass or more and 35 parts by mass or less, with respect to 100 parts by mass of the resin components. Also, content of the ultraviolet absorber included in the second protective layer (content with respect to 100 parts by mass of the resin components) may be more than the content of the ultraviolet absorber included in the first protective layer (content with respect to 100 parts by mass of the resin components).

The content of the light stabilizer included in the second protective layer is, for example, 0.1 parts by mass or more and 15 parts by mass or less, may be 1 part by mass or more and 15 parts by mass or less, and may be 3 parts by mass or more and 10 parts by mass or less, with respect to 100 parts by mass of the resin components. Also, the content of the light stabilizer included in the second protective layer (content with respect to 100 parts by mass of the resin components) may be more than the content of the light stabilizer included in the first protective layer (content with respect to 100 parts by mass of the resin components).

(4) Additives

The second protective layer may include an additive such as a silicone compound, a polymerization inhibitor, a cross-linking agent, an antistatic agent, an adhesiveness improving agent, an antioxidant, a leveling agent, a thixoactive agent, a coupling agent, a plasticizer, an antifouling agent, an antifoaming agent, a filling agent, and an antiblocking agent.

(5) Second protective layer

Also, the thickness of the second protective layer is, for example, 2 $\mu$m or more and 10 $\mu$m or less, may be 3 $\mu$m or more and 8 $\mu$m or less, and may be 3 $\mu$m or more and 5 $\mu$m or less. When the second protective layer is thin, the close adhesiveness (particularly, initial close adhesiveness) with respect to the first protective layer may decrease. Meanwhile, when the second protective layer is thick, the movement of the second protective layer becomes large under an environment where temperature changes repeatedly, and good weather resistant close adhesiveness may not be obtained.

3. Transfer layer

the transfer sheet in the present disclosure comprises a releasing film, and a transfer layer disposed on one surface of the releasing film. The transfer layer includes at least a first protective layer, and a second protective layer, in this order from the releasing film side. The transfer layer may include the first protective layer and the second protective layer, and may further include other layer. Examples of the other layer may include a design layer, and an adhesive layer. The transfer sheet may include the adhesive layer on the surface of the second protective layer that is opposite side to the first protective layer. Also, the transfer sheet may include the design layer on the surface of the second protective layer that is opposite side to the first protective layer. Also, the transfer layer may include the first protective layer, the second protective layer, the design layer, and the adhesive layer, in order from the releasing film side.

The thickness of the transfer layer is, for example, 8 $\mu$m or more, may be 10 $\mu$m or more, may be 12 $\mu$m or more, and may be 14 $\mu$m or more. When the transfer layer is thin, sufficient weather resistance may not be obtained. Meanwhile, the thickness of the transfer layer is, for example, 50 μm or less, may be 40 μm or less, and may be 30 μm or less.

(1) Adhesive layer

The transfer sheet may or may not include an adhesive layer on the surface of the second protective layer that is opposite side to the first protective layer. When the transfer sheet in the present disclosure includes a design layer described later, the adhesive layer may be included on the surface of the design layer that is opposite side to the second protective layer.

The adhesive layer is preferably a layer that comes into contact with the base body, in the layer constituting the transfer layer in the transfer sheet. In this case, the adhesive layer is disposed to improve the close adhesiveness between the transfer layer and the base body. The adhesive layer may include a component having adhesiveness. Examples of the component having adhesiveness may include a (meth)acrylic based resin, a vinyl chloride-vinyl acetate copolymer, a vinyl acetate based resin, an ester based resin, an epoxy based resin, an imide based resin, and a rubber based resin.

The adhesive layer may be a so-called pressure-sensitive adhesive layer. The pressure-sensitive adhesive layer has stickiness at room temperature. Examples of the resin included in the pressure-sensitive adhesive layer may include a (meth)acrylic based resin, a silicone based resin, a vinyl based resin, an ester based resin, a urethane based resin, an amide based resin, an epoxy based resin, a rubber based resins, and an ionomer based resin.

Also, the adhesive layer may be a so-called heat sealing layer. The heat sealing layer exhibits pressure-sensitive adhesiveness due to heat. Examples of the resin included in the heat sealing layer may include a thermoplastic resin. Examples of the thermoplastic resin may include an acrylic resin, a polyacryl polyol, a urethane resin, a vinyl chloride based resin, a vinyl acetate based resin, a vinyl chloride-vinyl acetate copolymer, a styrene-acrylic copolymer, an acrylic-vinyl acetate copolymer, a polyester resin, an amide resin, a cyanoacrylate resin, and an epoxy resin and these may be used alone, or multiple kinds of these may be combined and used. Among them, it is preferable to use at least one kind of an acrylic resin, a polyacrylic polyol, and a urethane resin, in order to improve the processability and close adhesiveness between the transfer layer and the base body during the production of the exterior member. Particularly, the acrylic resin is preferable.

When the cross-sectional sample piece of the transfer sheet is prepared using the resin embedding method and the microtome, the indentation hardness at the cross-section of the adhesive layer is not particularly limited, and is, for example, 100 MPa or more and 300 MPa or less, may be 120 MPa or more and 270 MPa or less, and may be 140 MPa or more and 250 MPa or less. When the indentation hardness at the cross-section of the adhesive layer is in the above range, for example, excellent weather resistant close adhesiveness with respect to the design layer can be obtained. Incidentally, the method for preparing the cross-sectional sample piece of the transfer sheet and the method for measuring the indentation hardness at the cross-section of the adhesive layer are similar to the methods described above for the first protective layer.

The thickness of the adhesive layer is, for example, 1 μm or more and 30 μm or less, may be 2 μm or more and 10 μm or less, may be 3 μm or more and 8 μm or less, and may be 3 μm or more and 5 μm or less. When the thickness of the adhesive layer is in the above range, the close adhesiveness between the adhesive layer and the base body during the production of the exterior member can easily improve.

In the present disclosure, the adhesive layer may include a colorant. Examples of the colorant may include the colorants in the design layer described below. When the adhesive layer includes the colorant, designability can be imparted to the transfer layer. In other words, the adhesive layer may share the functions of the design layer described below.

(2) Design layer

The transfer sheet may or may not include a design layer on the surface of the second protective layer that is opposite side to the first protective layer. By providing the design layer, the designability of the exterior member is improved. The design layer and the second protective layer may be disposed so as to be in direct contact, and may be disposed via another layer.

Examples of the design layer may include a solid layer (a layer all painted with ink) and a pattern layer (a layer printed with ink). As the design layer, the transfer sheet may include the pattern layer and the solid layer, in order from the releasing film side. Examples the pattern (design) in the pattern layer may include wood-grain, stone-grain, sand-grain, tile laying design, brick laying design, fabric-grain, leather tie-dyed pattern, geometric shape, letter, symbol, abstract pattern, and plant and flower pattern.

The design layer usually includes a colorant and a binder resin. Examples of the colorant may include inorganic pigments such as carbon black (cake ink), iron black, titanium white, antimony white, lead yellow, titanium yellow, Bengal red, cadmium red, ultramarine blue, and cobalt blue; organic pigments (including dyes) such as quinacridone red, isoindolinone yellow, nickel azo complex, phthalocyanine blue, and azomethine azoblack; metallic pigments such as aluminum and brass; and pearl pigments such as titanium dioxide-coated mica, and basic lead carbonate.

Examples of the binder resin may include a urethane based resin, an acrylic polyol based resin, a (meth)acrylic based resin, an ester based resin, an amide based resin, a butyral based resin, a styrene based resin, a urethane-acrylic copolymer, a vinyl chloride-vinyl acetate copolymer, a vinyl chloride-vinyl acetate-acrylic copolymer, a chlorinated propylene based resin, a cellulose nitrate based resin, and a cellulose acetate based resin. Among them, it is preferable to use a combination of an acrylic polyol based resin and a urethane based resin.

When the cross-sectional sample piece of the transfer sheet is prepared using the resin embedding method and the microtome, the indentation hardness at the cross-section of the design layer is not particularly limited, and is, for example, 100 MPa or more and 300 MPa or less, may be 120 MPa or more and 270 MPa or less, and may be 140 MPa or more and 250 MPa or less. When the indentation hardness at the cross-section of the design layer is in the above range, for example, excellent weather resistant close adhesiveness with respect to the adhesive layer or the second protective layer can be obtained. Incidentally, the method for preparing the cross-sectional sample piece of the transfer sheet and the method for measuring the indentation hardness at a cross-section of the design layer are similar to the methods described above for the first protective layer.

The design layer may include an additive such as an ultraviolet absorber, a light stabilizer, a curing agent, a plasticizer, and a catalyst, if necessary. The thickness of the design layer is, for example, 0.5 $\mu$m or more and 20 $\mu$m or less, may be 1 $\mu$m or more and 10 $\mu$m or less, and may be 2 $\mu$m or more and 5 $\mu$m or less.

(3) Second releasing film

The transfer sheet in the present disclosure may include a second releasing film on the surface of the second protective layer that is opposite side to the first protective layer. For example, when the transfer sheet is rolled up during the production, a blocking can be suppressed. The second releasing film is usually peeled off from the transfer sheet before the close adhering step described later. Since the details of the second releasing film are similar to the contents described for the first releasing film described later, the description herein is omitted.

4. Releasing film

The transfer sheet of the present disclosure includes a releasing film (first releasing film) on a surface of the first protective layer that is opposite to a second protective layer. The releasing film and the first protective layer may be disposed so as to be in direct contact, and may be disposed via another layer.

The releasing film preferably includes a resin film. Examples of the resin included in the resin film may include an ester based resin, an olefin based resin, a styrene based resin, a vinyl based resin, a (meth)acrylic based resin, an amide based resin, an imide based resin, and a carbonate based resin.

The resin film preferably includes the ester based resin or the olefin based resin. Examples of the ester based resin may include polyethylene terephthalate (PET), polybutylene terephthalate (PBT), polyethylene naphthalate (PEN), and polyethylene terephthalate-isophthalate copolymer. Among them, PET or PBT is preferable, and PET is more preferable in terms of less heat shrinkage during the production of the transfer sheet, and less shrinkage due to irradiation of ionizing radiation.

Examples of the olefin based resin may include polyethylene, polypropylene, polybutene, ethylene-propylene copolymer, and ethylene-propylene-butene copolymer. Among them, polypropylene is preferable in terms of less heat shrinkage during the production of the transfer sheet, and less shrinkage due to irradiation of ionizing radiation.

The resin film may be an oriented film, and may be a cast film. The draw ratio in the machine direction (MD) of the oriented film is, for example, 5-fold or more and 30-fold or less. The draw ratio in the transverse direction (TD) of the oriented film is, for example, 5-fold or more and 30-fold or less. Also, the thickness of the releasing film is, for example, 10 $\mu$m or more and 200 $\mu$m or less, may be 15 $\mu$m or more and 150 $\mu$m or less, and may be 20 $\mu$m or more and 100 $\mu$m or less.

Depending on the surface shape of the intended first protective layer, the releasing film in the present disclosure may be used as a mirror film, and may be used as a low-gloss film.

When the releasing film is a low-gloss film, the gloss value at 60° of the first surface, positioned on the opposite side to the transfer layer, of the releasing film is, for example, 90 or more, may be 100 or more, and may be 110 or more. When the gloss value at 60° of the first surface is the above value or more, a transfer sheet with excellent design visibility can be obtained, even the releasing film is not peeled off. Therefore, it is possible to inspect the defect without peeling the releasing film, and workability is improved. Also, since the releasing film itself can be used as a masking, the amount of plastic used can be reduced. Meanwhile, the gloss value at 60° of the first surface of the releasing film is, for example, 200 or less, may be 160 or less, and may be 140 or less.

The gloss value at 60° of the first surface of the releasing film is a value measured by the following method. Placed a releasing film peeled off from the transfer sheet, on a black mat board having no gloss, so that the first surface is on the upper side, and using a gloss meter (Microtrigloss (model name) from BYK-Gardner GmbH), measure the specular glossiness at 60° according to Method 3 of JIS Z 8741:1997.

Also, the gloss value at 60° of the second surface, positioned on the transfer layer side, of the releasing film is, for example, 40 or less, may be 35 or less, and may be 30 or less. When the gloss value at 60° of the second surface of the releasing film is the above value or less, the transfer layer after the releasing film is peeled off exhibits low gloss tone. Meanwhile, the gloss value at 60° of the second surface is, for example, 3.0 or more, may be 5.0 or more, and may be 10 or more. When the gloss value at 60° of the second surface is low, the resin of the first protective layer may penetrate into the fine matte shape, making it difficult to peel off. Also, there is a possibility that the intended shape cannot be molded.

The gloss value at 60° of the second surface of the releasing film is a value measured by the following method. Placed a releasing film peeled off from the transfer sheet, on a black mat board having no gloss, so that the second surface is on the upper side, and using a gloss meter (Microtrigloss (model name) from BYK-Gardner GmbH), measure the specular glossiness at 60° according to Method 3 of JIS Z 8741:1997.

The maximum height Rz of the first surface is, for example, 0.8 $\mu$m or less, may be 0.6 $\mu$m or less, and may be 0.4 $\mu$m or less. Rz (maximum height) is one of the peak and height parameters of the contour curve specified in JIS B0601:2013, which is the sum of the height of the highest peak and the depth of the deepest valley of the contour curve in the reference length. Therefore, when Rz (maximum height) is in the above range, diffuse reflection of light is suppressed and the visibility of the design is improved. Meanwhile, the maximum height Rz of the first surface is, for example, 0.1 $\mu$m or more, and may be 0.2 $\mu$m or more.

The maximum height Rz of the first surface of the releasing film is a value measured with the following measuring device and the following conditions, using rectangle (1024 $\mu$m x 768 $\mu$m) at arbitrary point on the first surface of the releasing film as the measuring area.

- Measuring device: shape analysis laser microscope (VK-X1000, KEYENCE Corporation)
- Objective lens: 50-fold
- Measure mode: geometric measure mode
- Measurement pitch: 12 $\mu$m
- Measurement quality: Fast mode
- Scanning mode: laser confocal

Also, in the present specification, Rz (maximum height) is the average value of the measurement values at 10 arbitrary locations.

In the releasing film, the maximum height Rz of the second surface is, for example, 2.0 $\mu$m or more, may be 3.0 $\mu$m or more, and may be 4.0 $\mu$m or more. When the maximum height Rz of the second surface is low, the transfer layer after the releasing film is peeled off hardly exhibits low gloss tone. Meanwhile, the maximum height Rz of the second surface is, for example, 6.0 $\mu$m or less, and may be 5.0 $\mu$m or less. The maximum height Rz of the second surface is a value measured for the second surface of the releasing film by the similar method as the method for measuring the maximum height Rz of the first surface described above.

The releasing film in the present disclosure is not particularly limited, and may be a single layer, and may have a multi-layered structure. When the releasing film is a low-gloss film, it is preferable to include, for example, a film layer including the above first surface, and a matte layer, disposed on the transfer layer side surface of the film layer, including the above second surface.

(i) Film layer

The film layer is not particularly limited as long as it includes the first surface described above, and preferably the resin film described above.

(ii) Matte layer

The matte layer is not particularly limited as long as it includes the second surface described above, and includes, for example, a resin component, and particles as a matting agent. Hereinafter, the matte layer including the resin component and particles as the matting agent is referred to as a first matte layer. The resin component in the first matte layer is typically a cured product (cross-linked structure) of a curable resin. Meanwhile, the resin component may be a thermoplastic resin. Particularly, the first matte layer preferably includes the cured product of the curable resin. When the first matte layer includes the cured product of the curable resin, ability to release with respect to the first protective layer is improved.

When the second surface of the releasing film is the surface of the first matte layer, the gloss value at 60° and maximum height Rz described above can be adjusted by, for example, selecting the type of the particles, and adjusting the average particle size and content.

Examples of the curable resin may include an ionizing radiation curable resin and a thermosetting resin. Examples of the ionizing radiation curable resin may include an electron beam curable resin, and an ultraviolet ray curable resin.

The ionizing radiation curable resin (ionizing radiation curable compound) is not limited to as long as it is a material that generates cross-linking polymerization reaction by irradiation of ionizing radiation and changes to a three-dimensional polymer structure. Examples of the ionizing radiation curable resin may include a prepolymer, an oligomer and a monomer, including a polymerizable unsaturated bond or an epoxy group in the molecule, capable of being cross-linked by irradiation of the ionizing radiation. In the present disclosure, one kind of the ionizing radiation curable resin may be used alone, and two kinds or more may be used in a combination. Particularly, as the ionizing radiation curable resin, at least one of a multifunctional monomer and an oligomer is preferably used.

Examples of the ionizing radiation curable resin may include a (meth)acrylate based resin such as a urethane (meth)acrylate, an ester (meth)acrylate, an epoxy (meth)acrylate; a silicon based resin such as siloxane; an ester based resin; and an epoxy based resin. The (meth)acrylate based resin refers to an acrylate based resin or a methacrylate based resin.

The weight average molecular weight of the ionizing radiation curable resin is, for example, 500 or more and 80,000 or less, and may be 1,000 or more and 50,000 or less. The weight average molecular weight is a value measured by gel permeation chromatography (GPC) method, using polystyrene as the reference material.

As the ionizing radiation curable resin, at least a multifunctional monomer or an oligomer, with a weight average molecular weight of 500 or more, is preferably included. Examples of such multifunctional monomer or oligomer may include a (meth)acrylate based resin such as dipentaerythritol hexa(meth)acrylate, dipentaerythritol penta(meth)acrylate, a urethane (meth)acrylate, an ester (meth)acrylate, and an epoxy (meth)acrylate.

Meanwhile, examples of the thermosetting resin may include an unsaturated ester based resin, a urethane based resin (including two-liquid curing type polyurethane), an epoxy based resin, an aminoalkyd based resin, a phenolic based resin, a urea based resin, a diallylphthalate based resin, a melamine based resin, a guanamine based resin, a melamine urea co-condensation based resin, and a silicon based resin and a siloxane based resin.

Examples of the particles may include inorganic particles and synthetic resin particles. Examples of inorganic particles may include silica, alumina, calcium carbonate, magnesium carbonate, calcium sulfate, barium sulfate, and kaolin. Examples of the synthetic resin particles may include acrylic beads, urethane beads, nylon beads, silicone beads, silicone rubber beads, polycarbonate beads, and polyolefin wax (such as polypropylene wax, polyethylene wax).

The average particle size of the particles is preferably 1.0 μm or more and 10 μm or less, and more preferably 2.0 μm or more and 8.0 μm or less.

Also, the content of the matting agent in the first matte layer is preferably 3 parts by mass or more and 80 parts by mass or less, and more preferably 5 parts by mass or more and 60 parts by mass or less, with respect to 100 parts by mass of the resin components.

If necessary, the first matte layer may include an additive such as a releasing agents, an ultraviolet absorber, an infrared absorber, a light stabilizer, a polymerization inhibitor, a crosslinker, an antistatic agent, an antioxidant, a leveling agent, a coupling agent, a plasticizer, an antifoaming agent, a filler, a thermal radial generating agent, and an aluminum chelating agent. The thickness of the first matte layer is not particularly limited, and it is, for example, 0.1 μm or more and 10 μm or less.

The first matte layer can be obtained by, for example, applying an ink for forming a matte layer, including curable resin, to one surface of the film layer, and curing thereof.

The matte layer may be, for example, a layer (second matte layer) wherein one surface has an uneven shape composed of irregular wrinkles. As a material and a forming method of the second matte layer, the material and the forming method of the releasing layer described in JP-A No. 2022-149930 can be adopted.

The first matte layer or the second matte layer may be formed on the entire surface of one surface of the film layer, or may be formed on a partial region of one surface of the film layer. The entire surface of one surface of the film layer refers to a region of 90% or more of one surface of the film layer. The matte layer may be disposed so as to cover one surface of the film layer with 95% or more, and may be disposed so as to cover one surface thereof with 100%. Meanwhile, the matte layer may be disposed so as to cover one surface of the film layer with 50% or less, may be disposed so as to cover one surface thereof with 40% or less, and may be disposed so as to cover one surface thereof with 30% or less.

The low-gloss film is not limited to the above structure including the film layer and the matte layer, and may be a single layer. For example, a matte film wherein the particles exemplified in the first matte layer are kneaded may be used. In this case, the gloss value at 60° and Rz of the first surface located on the side opposite to the transfer layer side, and the gloss value at 60° and Rz of the second surface located on the transfer layer side are substantially the same.

B. Method for producing transfer sheet

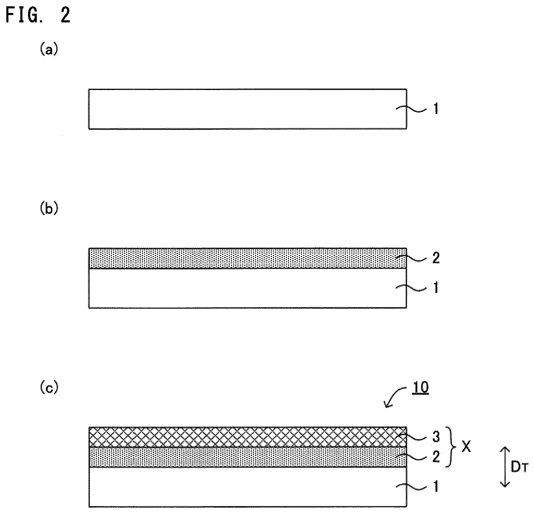

FIGS. 2 are schematic cross-sectional views exemplifying the method for producing a transfer sheet in the present disclosure. Firstly, as shown in FIG. 2(a), a releasing film 1 is prepared. Then, as shown in FIG. 2(b), a first protective layer 2 is formed by coating a surface of the releasing film 1 with a first composition including a first curable resin composition and a weather resistant agent, and curing. Then, as shown in FIG. 2(c), a second protective layer 3 is formed by coating a surface of the first protective layer 2 that is opposite side to the releasing film 1 with a second composition including a second curable resin composition and a weather resistant agent, and curing. Thereby, a transfer layer 10 including the releasing film 1, the first protective layer 2, and the second protective layer 3, in this order, in a thickness direction $D_T$ is obtained. In FIGS. 2, the transfer layer X corresponds to the first protective layer 2 and the second protective layer 3. Also, when a cross-sectional sample piece of the transfer sheet 10 is prepared using a resin embedding method and a microtome, an indentation hardness at a cross-section of the first protective layer 2 is in a predetermined range, and the indentation hardness at a cross-section of the second protective layer 3 is in a predetermined range.

According to the present disclosure, a transfer sheet for an exterior member having excellent weather resistant close adhesiveness and scratch resistance is obtained for the reasons described above.

1. First protective layer forming step

The first protective layer forming step in the present disclosure is a step of forming a first protective layer by coating a surface of the releasing film with a first composition including a first curable resin composition and a weather resistant agent, and curing. The first composition is a composition for forming the first protective layer. Since the first curable resin composition and the weather resistant agent are similar to the content described in "A. Transfer sheet" above, the description herein is omitted.

Examples of the method for applying the first composition may include a gravure printing method, a bar coating method, a roll coating method, a reverse roll coating method, and a comma coating method. By applying the first composition, a first coating layer is obtained. Examples of the method for curing the first coating layer may include a method for irradiating an ionizing radiation such as an electron beam and an ultraviolet ray; and a method for applying heat.

2. Second protective layer forming step

The second protective layer forming step in the present disclosure is a step of forming a second protective layer by coating a surface of the first protective layer that is opposite side to the releasing film with a second composition including a second curable resin composition and a weather resistant agent, and curing. The second composition is a composition for forming the second protective layer. Since the second curable resin composition and the weather resistant agent are similar to the content described in "A. Transfer sheet" above, the description herein is omitted.

Examples of the method for applying the second composition may include a gravure printing method, a bar coating method, a roll coating method, a reverse roll coating method, and a comma coating method. By applying the second composition, a second coating layer is obtained. Examples of the method for curing the second coating layer may include a method for applying heat.

3. Other steps

In addition to the first protective layer forming step and the second protective layer forming step, the method for producing the transfer sheet in the present disclosure may include a step of forming a layer belonging to the transfer layer described above. The method for producing the transfer sheet in the present disclosure may include, for example, an adhesive layer forming step of forming an adhesive layer on the surface of the second protective layer that is opposite side to the first protective layer. As a method for forming the adhesive layer, a composition for forming the adhesive layer can be applied by a well-known method such as a gravure printing method, a bar coating method, a roll coating method, a reverse roll coating method, and a comma coating method, and then dried and cured as necessary. The method for producing the transfer sheet in the present disclosure may include, for example, a design layer forming step of forming a design layer on the surface of the second protective layer that is opposite side to the first protective layer. Examples of the method for forming the design layer may include a method for coating an ink including a colorant, a binder resin, and a solvent to the surface of the second protective layer that is opposite to the first protective layer. Also, since the transfer sheet obtained by respective steps described above is similar to the content described in "A. Transfer sheet" above, the description herein is omitted.

C. Method for producing exterior member

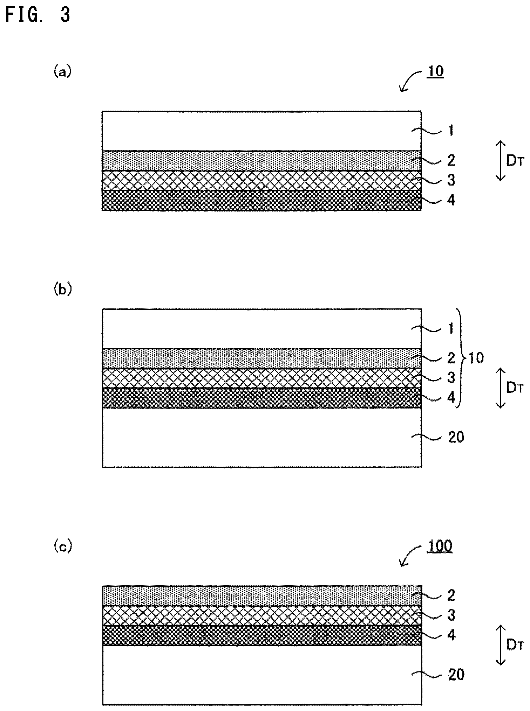

FIGS. 3 are schematic cross-sectional views exemplifying the method for producing an exterior member in the present disclosure. Firstly, as shown in FIG. 3(a), a transfer sheet 10 is prepared. The transfer sheet 10 shown in FIG. 3(a) includes a releasing film 1, a first protective layer 2, a second protective layer 3, and an adhesive layer 4 in this order, in a thickness direction $D_T$. Then, as shown in FIG. 3(b), the second protective layer 3 side surface of the transfer sheet 10 and a base body 20 are faced and closely adhered. "The second protective layer 3 side surface of the transfer sheet 10" refers to the surface of the transfer sheet 10 that is located on the second protective layer 3 side, based on the releasing film 1. Since the transfer sheet 10 shown in FIG. 3(a) includes the adhesive layer 4, "the second protective layer 3 side surface of the transfer sheet 10" corresponds to the surface of the adhesive layer 4. Then, as shown in FIG. 3(c), the releasing film 1 is peeled off from the transfer sheet 10. Thereby, an exterior member 100 including the first protective layer 2, the second protective layer 3, the adhesive layer 4, and the base body 20 in this order in the thickness direction $D_T$, is obtained.

According to the present disclosure, an exterior member having excellent weather resistant close adhesiveness and scratch resistance is obtained by using the transfer sheet described above.

1. Preparing step

The preparing step in the present disclosure is a step of preparing the transfer sheet described above. Since the transfer sheet is similar to the content described in "A. Transfer sheet" above, the description herein is omitted.

2. Close adhering step

The close adhering step in the present disclosure is a step of facing a second protective layer side surface of the transfer sheet and a base body, and closely adhering the two. When facing the transfer sheet and the base body, the two may be disposed so as to be in direct contact, and may be disposed via another layer. For example, when the transfer sheet does not include the adhesive layer, an adhesive agent layer is disposed.

The material of the base body in the present disclosure is not particularly limited, and can be appropriately selected from, for example, resins, wood, metals, non-metallic inorganic materials, paper, non-woven fabrics or woven fabrics, according to the use applications.

One example of the base body in the present disclosure may include a resin member. Examples of the resin used for the resin member may include a vinyl chloride based resin, a (meth)acrylic based resin, an ester based resin, a styrene based resin, an olefin based resin, an acrylonitrile-butadiene-styrene based copolymer (ABS based resin), a phenolic based resin, a cellulose based resin, a rubber, a polycarbonate resin, and a melamine resin. The resin member may include fibers such as carbon fibers, glass fibers, aramid fibers, xyron fibers, boron fibers, and polyethylene fibers. By including the fibers, strength of the resin member can be improved. Also, other examples of the base body may include a woody member. Examples of the woody member may include a wood single panel, a plywood panel, a particle board, and a woody fiberboard. Examples of the wood used for the woody member may include cedar, hinoki cypress, pine, and lauan.

Also, other examples of the base body may include a metal member. Examples of the metal used for the metal member may include iron, and aluminum. Also, other examples of the base body may include a ceramic member. The material of the ceramic member may be ceramics such as glass and pottery, may be non-cement ceramics such as gypsum, and may be non-pottery ceramics such as ALC (lightweight aerated concrete). Also, a calcium silicate plate can also be used as the ceramic member.

The base body may be subjected to a surface treatment in order to improve the close adhesiveness with respect to the transfer sheet. For example, when the base body is an aluminum member, examples of the surface treatment may include an alumite treatment, a chemical conversion treatment, a plating treatment, a coating treatment, a blast treatment, a polishing treatment. For example, when the base body is a ceramic member, an UV coating treatment or a coating treatment may be used.

The shape of the base body is not particularly limited, and examples may include a plate shape, a sheet shape, and a tridimensional shape. Also, the base body may include a flat surface portion, may include a curved surface portion, and may include both the flat surface portion and the curved surface portion. Also, the base body may include at least one of a convex portion, a concave portion, a convexity portion, a concavity portion, and a through portion.

Particularly, the base body in the present disclosure is preferably an acrylic plate, a polycarbonate plate, a non-flammable plate, a metal plate, a vinyl chloride plate, a melamine plate, or a carbon fiber reinforced plastic plate. Examples of the non-flammable plate may include a fiber reinforced cement plate, and a calcium silicate plate is preferable.

In the close adhering step, the second protective layer side surface of the transfer sheet and the base body are faced and closely adhered. Examples of the method for closely adhering the two may include a lamination method. In the lamination method, for example, a laminate including the transfer sheet and the base body is heated and pressurized from the transfer sheet side. Examples of the method for heating and pressuring may include a method using a roll transfer device. The roll temperature in the roll transfer device is, for example, 200°C or less, and may be 180°C or less. When the roll temperature is high, the transfer sheet is softened more than necessary. Meanwhile, the roll temperature in the roll transfer device is, for example, 100°C or more, may be 110°C or more, and may be 120°C or more. Also, after the close adhering step, the method for producing an exterior member in the present disclosure may further include a peeling step of peeling the releasing film off from the first protective layer.

3. Exterior member

The exterior member in the present disclosure comprises a first protective layer, a second protective layer, an adhesive layer and a base body, in this order in a thickness direction. Also, the exterior member may be an exterior member with releasing film, which includes a releasing film on the surface of the first protective layer that is opposite to the second protective layer; and may be an exterior member without a releasing film.

Examples of the exterior member in the present disclosure may include a construction material (exterior member of a construction structure). The construction material is used for, for example, house, office, shop, hospital, clinic, general road and highway, and agricultural house. Examples of the use application of the exterior member may include exterior wall, roof, eave soffit, door pocket, window frame, door, door frame, handrail, fence, and drying stand. Also, specific applications of the exterior member may include soundproof wall or windproof wall in general road and highway, balcony partition plate, fence, roof member in terrace or carport, and transparent member constituting an agricultural house.

Besides the construction material (exterior member of a construction structure), the exterior member in the present disclosure is used as, for example, an exterior member of vehicle, ship or airplane, an exterior member of industrial machine, and an exterior member of various lenses. Examples of the exterior member of the vehicle may include window materials such as side window, rear window, roof window, front window, and quarter window; headlight cover, turn signal lamp lens, reflector, and pillar. Examples of the vehicle include a light vehicle such as an automobile, a railway vehicle, a construction machine, and a golf cart. Examples of the exterior material of the industrial machine include a window material for visual recognition in a machine tool. Examples of the lens include a lens of a traffic light.

D. Exterior member

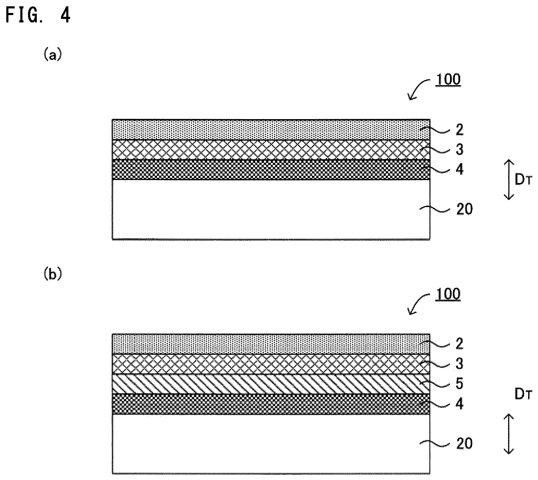

FIGS. 4 are schematic cross-sectional views exemplifying the exterior member in the present disclosure. As shown in FIG. 4(a), the exterior member 100 in the present disclosure comprises a first protective layer 2, a second protective layer 3, an adhesive layer 4 and a base body 20, in this order in a thickness direction; wherein the first protective layer 2 includes a cured product of a first curable resin composition, and a weather resistant agent; the second protective layer 3 includes a cured product of a second curable resin composition, and a weather resistant agent; the cured product of the first curable resin composition and the cured product of the second curable resin composition respectively include a (meth)acrylic component, and a urethane component. When a cross-sectional sample piece of the exterior member 100 is prepared using a resin embedding method and a microtome, an indentation hardness at a cross-section of the first protective layer 2 is 150 MPa or more and 300 MPa or less, and an indentation hardness at a cross-section of the second protective layer 3 is 2 MPa or more and 50 MPa or less. Here, the adhesive layer 4 may also have the functions of a design layer. Further, as shown in FIG. 4(b), the exterior member 100 may include a design layer 5 between the second protective layer 3 and the adhesive layer 4.

According to the present disclosure, since the first protective layer includes a predetermined cured product of a first curable resin composition, and a weather resistant agent, and an indentation hardness at a cross-section thereof is in a predetermined range; and the second protective layer includes a predetermined cured product of a second curable resin composition, and a weather resistant agent, and an indentation hardness at a cross-section thereof is in a predetermined range, an exterior member having excellent scratch resistance, and good weather resistant close adhesiveness between the first protective layer and the second protective layer can be obtained.

1. First protective layer

The exterior member in the present disclosure includes a first protective layer. The first protective layer contributes to the improvement of the surface properties (for example, scratch resistance and abrasion resistance) of the exterior member. The first protective layer may be the outermost surface of the exterior member.

In the present disclosure, when a cross-sectional sample piece of the exterior member is prepared using a resin embedding method and a microtome, an indentation hardness at a cross-section of the first protective layer is usually 150 MPa or more, may be 180 MPa or more, and may be 190 MPa or more. When the indentation hardness at the cross-section of the first protective layer is low, good scratch resistance and abrasion resistance may not be obtained. Meanwhile, when the cross-sectional sample piece of the exterior member is prepared using the resin embedding method and the microtome, the indentation hardness at the cross-section of the first protective layer is usually 300 MPa or less, may be 280 MPa or less, and may be 250 MPa or less. When the indentation hardness at the cross-section of the first protective layer is high, the following ability of the first protective layer with respect to the second protective layer decreases, and good weather resistant close adhesiveness may not be obtained.

The method for adjusting the indentation hardness at the cross-section of the first protective layer is similar to the method described in "A. Transfer sheet" above.

In the exterior member, the indentation hardness at the first protective layer is a value obtained by measuring the cross-sectional sample piece prepared using the resin embedding method and microtome by the following method.

(Preparation of cross-sectional sample piece for measurement)

A cut sample is prepared by cutting the exterior member into an arbitrary size. An embedded sample, wherein the cut sample is embedded in a resin, is prepared by embedding the cut sample into resin (ordinary temperature curing type 2-component epoxy curable resin), and leaving it at room temperature for 24 hours or more to cure (resin embedding method). The embedded sample is cut vertically using a microtome to prepared a cross-sectional sample piece for measuring an indentation hardness, wherein the cross-section of the layer to be measured is exposed. The method for cutting an embedded sample is similar to the method described in "A. Transfer sheet" above.

The method for measuring the indentation hardness is similar to the method described in "A. Transfer sheet" above.

The resin component, the weather resistant agent, the additive, and the thickness of the first protective layer are similar to the content described in "A. Transfer sheet" above.

2. Second protective layer

The exterior member in the present disclosure includes a second protective layer. The second protective layer and the first protective layer may be disposed so as to be in direct contact, and may be disposed via another layer.

When a cross-sectional sample piece of the exterior member is prepared using a resin embedding method and a microtome, an indentation hardness at a cross-section of the second protective layer is usually 2 MPa or more, may be 5 MPa or more, may be 10 MPa or more, may be 15 MPa or more, and may be 20 MPa or more. Meanwhile, the indentation hardness at the cross-section of the second protective layer is usually 50 MPa or less, may be 40 MPa or less, and may be 30 MPa or less. When the indentation hardness at the cross-section of the second protective layer is high, the close adhesiveness (particularly, initial close adhesiveness) with respect to the first protective layer may decrease. Incidentally, the method of preparing the cross-sectional sample piece of the exterior member and the method for measuring the indentation hardness at the cross-section of the second protective layer are similar to the methods described above for the first protective layer.

The indentation hardness at the cross-section of the second protective layer in the exterior member may be more than the indentation hardness at the cross-section of the second protective layer in the transfer sheet. This is because the layer is compressed by the transfer.

The resin component, the weather resistant agent, the additive, and the thickness of the second protective layer are similar to the content described in "A. Transfer sheet" above.

3. Adhesive layer

The exterior member in the present disclosure includes an adhesive layer. Examples of the adhesive layer may include one similar to the adhesive layer described in "A. Transfer sheet" above. Also, the indentation hardness at the cross-section of the adhesive layer in the exterior member may be more than the indentation hardness at the cross-section of the adhesive layer in the transfer sheet. This is because the layer is compressed by the transfer. The adhesive layer of the exterior member in the present disclosure may be an adhesive agent layer disposed between the transfer sheet and the base body, when the transfer sheet described above does not include an adhesive layer.

4. Design layer

The exterior member in the present disclosure may include a design layer. Examples of the design layer may include one similar to the design layer described in "A. Transfer sheet" above. Also, the indentation hardness at the cross-section of the design layer in the exterior member may be more than the indentation hardness at the cross-section of the design layer in the transfer sheet. This is because the layer is compressed by the transfer.

5. base body

Since the base body in the present disclosure is similar to the contents described in "C. Method for producing exterior member" above, the description herein is omitted.

6. Exterior member

Since the exterior member in the present disclosure is similar to the contents described in "C. Method for producing exterior member" above, the description herein is omitted.

The present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

Examples

[Example 1]

The following composition 1 for forming a first protective layer was applied on one surface of a releasing film 1 (mirror surface PET film E5001 from Toyobo Co., Ltd.) so as the coating amount after drying was 5 $g/m^2$, and dried. Then, an electron beam (pressurized voltage: 90 kV, 5 Mrad (50 kGy)) was irradiated to form a first protective layer with a thickness of 5 $\mu$m.

<Composition 1 for forming first protective layer>

- Ionizing radiation curable resin composition: 100 parts by mass

  (Caprolactone based urethane acrylate: 30 parts by mass)
  (Pentaerythritol triacrylate (acrylate including hydroxyl group): 50 parts by mass)
  (Acrylate: 20 parts by mass)

- Triazine based ultraviolet absorber: 2 parts by mass (Hydroxyphenyltriazine based ultraviolet absorber (product name: TINUVIN479 from BASF)
- Light stabilizer including a reactive functional group: 2 parts by mass
  (Product name: Sanol LS-3410, from Nippon NYUKAZAI Co., Ltd.)
- Solvent: adequate amount

Then, after subjecting the surface of the obtained first protective layer to a corona discharge treatment, the following composition 1 for forming a second protective layer was applied, dried, and a second protective layer with a thickness of 5 $\mu$m was formed.

<Composition 1 for forming second protective layer>

- Polycarbonate based urethane acrylic copolymer: 100 parts by mass (ratio of urethane and acrylic was 9:1)
- Hydroxyphenyltriazine based ultraviolet absorber: 17 parts by mass (product name: TINUVIN400 from BASF)
- Hydroxyphenyltriazine based ultraviolet absorber: 13 parts by mass (product name: TINUVIN479 from BASF)
- Hindered amine based light stabilizer: 8 parts by mass (product name: TINUVIN123, from BASF)
- Anti-blocking agent: 9 parts by mass (silica particles, average particle size of 3 $\mu$m)
- Curing agent: 25 parts by mass (hexamethylene diisocyanate)
- Solvent: adequate amount

Then, the surface of the obtained second protective layer was coated with a heat sealing agent including acrylic resin (polymethyl methacrylate), dried and an adhesive layer with a thickness of 5 $\mu$m was formed. Thereby, a transfer sheet including the releasing film, the first protective layer, the second protective layer, and the adhesive layer (heat sealing layer) in this order, in a thickness direction, was obtained.

[Example 2]

One surface of the releasing film 2 produced by the following method was coated with the following composition 2 for forming a first protective layer so as the coating amount after drying was 5 $g/m^2$, and dried. Then, an electron beam (pressurized voltage: 90 kV, 5 Mrad (50 kGy)) was irradiated to form a first protective layer with a thickness of 5 $\mu$m.

<Production of releasing film 2>

The corona treated surface of a PET film (E5101 from Toyobo Co., Ltd.), with a thickness of 50 μm, was coated with the following thermosetting resin composition so as the coating amount after drying was 3 g/m², and cured in an oven at 40°C for 5 days. Thereby, a releasing film including a film layer and a matte layer was obtained.

<Thermosetting resin composition>

- Polyester polyol resin: 100 parts by mass
- Curing agent: 15 parts by mass (hexamethylene diisocyanate)
- Matting agent: 15 parts by mass (silica particles, average particle size of 3 μm)
- Solvent: adequate amount

<Composition 2 for forming first protective layer>

- Ionizing radiation curable resin composition: 100 parts by mass

    (Caprolactone based urethane acrylate: 30 parts by mass)
    (Pentaerythritol triacrylate (acrylate including hydroxyl group): 70 parts by mass)

- Triazine based ultraviolet absorber: 2 parts by mass (Hydroxyphenyltriazine based ultraviolet absorber (product name: TINUVIN479 from BASF)
- Light stabilizer including a reactive functional group: 2 parts by mass
  (Product name: Sanol LS-3410, from Nippon NYUKAZAI Co., Ltd.)
- Solvent: adequate amount

Then, after subjecting the surface of the obtained first protective layer to a corona discharge treatment, the above composition 1 for forming a second protective layer was applied, dried, and a second protective layer with a thickness of 5 μm was formed.

Then, the surface of the obtained second protective layer was coated with the following ink composition 1 including a resin component and a pigment by gravure coating, dried, and a design layer with a thickness of 3 to 5 μm, including a pattern layer and a solid layer, was formed. The surface of the obtained design layer was coated with the adhesive composition 1 including an acrylic resin and a vinyl chloride-vinyl acetate copolymer at 6:4 (mass ratio) by gravure coating, dried, and an adhesive layer with a thickness of 2 μm was formed. Thereby, a transfer sheet including the releasing film, the first protective layer, the second protective layer, the design layer, and the adhesive layer in this order, in a thickness direction, was obtained.

<Ink Composition 1>

- Resin component of the ink (mixed resin of urethane resin and polyacrylic polyol (mass ratio at 20:80))
- Pigments (organic pigments and inorganic pigments)

[Example 3]

One surface of the releasing film 3 into which a matting agent was kneaded (a PET film with a thickness of 50 μm, haze (Hz): 83%, total light transmittance (Tt): 68%, specular gloss at 60° of 16%) was coated with the following composition 3 for forming a first protective layer so as the coating amount after drying was 5 g/m², and dried. Then, an electron beam (pressurized voltage: 90 kV, 5 Mrad (50 kGy)) was irradiated to form a first protective layer with a thickness of 5 μm.

<Composition 3 for forming first protective layer>

- Ionizing radiation curable resin composition: 100 parts by mass

  (Caprolactone based urethane acrylate: 60 parts by mass)
  (Urethane acrylate: 40 parts by mass)

- Triazine based ultraviolet absorber: 2 parts by mass (Hydroxyphenyltriazine based ultraviolet absorber (product name: TINUVIN479 from BASF)
- Light stabilizer including a reactive functional group: 2 parts by mass
  (Product name: Sanol LS-3410, from Nippon NYUKAZAI Co., Ltd.)
- Solvent: adequate amount

Then, after subjecting the surface of the obtained first protective layer to a corona discharge treatment, the following composition 2 for forming a second protective layer was applied, dried, and a second protective layer with a thickness of 5 μm was formed.

<Composition 2 for forming second protective layer>

- Polycarbonate based urethane acrylic copolymer: 95 parts by mass (ratio of urethane and acrylic was 9:1)
- Acrylic polyol: 5 parts by mass
- Hydroxyphenyltriazine based ultraviolet absorber: 17 parts by mass (product name: TINUVIN400 from BASF)
- Hydroxyphenyltriazine based ultraviolet absorber: 13 parts by mass (product name: TINUVIN479 from BASF)
- Hindered amine based light stabilizer: 8 parts by mass (product name: TINUVIN123, from BASF)
- Anti-blocking agent: 9 parts by mass (silica particles, average particle size of 3 μm)
- Curing agent: 25 parts by mass (hexamethylene diisocyanate)
- Solvent: adequate amount

Then, the surface of the obtained second protective layer was coated with the above ink composition 1 including a resin component and a pigment by gravure coating, dried, and a design layer with a thickness of 3 to 5 μm, including a pattern layer and a solid layer, was formed. The surface of the obtained design layer was coated with the adhesive composition 1 including an acrylic resin and a vinyl chloride-vinyl acetate copolymer at 6:4 (mass ratio) by gravure coating, dried, and an adhesive layer with a thickness of 2 μm was formed. Thereby, a transfer sheet including the releasing film, the first protective layer, the second protective layer, the design layer, and the adhesive layer in this order, in a thickness direction, was obtained.

[Example 4]

One surface of the above releasing film 3 was coated with the following composition 2 for forming a first protective layer so as the coating amount after drying was 5 g/m$^2$, and dried. Then, an electron beam (pressurized voltage: 90 kV, 5 Mrad (50 kGy)) was irradiated to form a first protective layer with a thickness of 5 μm.

Then, after subjecting the surface of the obtained first protective layer to a corona discharge treatment, the following composition 3 for forming a second protective layer was applied, dried, and a second protective layer with a thickness of 5 μm was formed.

<Composition 3 for forming second protective layer>

- Polycarbonate based urethane acrylic copolymer: 98 parts by mass (ratio of urethane and acrylic was 9:1)
- Acrylic polyol: 2 parts by mass
- Hydroxyphenyltriazine based ultraviolet absorber: 17 parts by mass (product name: TINUVIN400 from BASF)
- Hydroxyphenyltriazine based ultraviolet absorber: 13 parts by mass (product name: TINUVIN479 from BASF)
- Hindered amine based light stabilizer: 8 parts by mass (product name: TINUVIN123, from BASF)
- Anti-blocking agent: 9 parts by mass (silica particles, average particle size of 3 μm)
- Curing agent: 25 parts by mass (hexamethylene diisocyanate)

Then, the surface of the obtained second protective layer was coated with the above ink composition 1 including a resin component and a pigment by gravure coating, dried, and a design layer with a thickness of 3 to 5 $\mu$m, including a pattern layer and a solid layer, was formed. The surface of the obtained design layer was coated with the adhesive composition 1 including an acrylic resin and a vinyl chloride-vinyl acetate copolymer at 6:4 (mass ratio) by gravure coating, dried, and an adhesive layer with a thickness of 2 $\mu$m was formed. Thereby, a transfer sheet including the releasing film, the first protective layer, the second protective layer, the design layer, and the adhesive layer in this order, in a thickness direction, was obtained.

[Example 5]

(Production of exterior member)

Adhesive layer side surface of the transfer sheet obtained in Example 1 and one surface of a base body (acrylic plate with a thickness 2 mm ("Comoglas" from Kuraray Co., Ltd.)) were opposed to each other and laminated. A laminator was used to heat and pressurize the laminate from the transfer sheet side at a lamination roll temperature of 170°C. and a conveyance speed 2 m/min, and the laminate was brought into close contact. The releasing film was peeled from the adhered transfer sheet to obtain an exterior member.

[Example 6]

(Preparation of transfer sheet)

One surface of the above releasing film 3 was coated with the above composition 2 for forming a first protective layer so as the coating amount after drying was 5 g/m$^2$, and dried. Then, an electron beam (pressurized voltage: 90 kV, 5 Mrad (50 kGy)) was irradiated to form a first protective layer with a thickness of 5 $\mu$m.
Then, after subjecting the surface of the obtained first protective layer to a corona discharge treatment, the above composition 2 for forming a second protective layer was applied, dried, and a second protective layer with a thickness of 5 $\mu$m was formed.
Then, the surface of the obtained second protective layer was coated with the above ink composition 1 including a resin component and a pigment by gravure coating, dried, and a design layer with a thickness of 3 to 5 $\mu$m, including a pattern layer and a solid layer, was formed. Thereby, a transfer sheet including the releasing film, the first protective layer, the second protective layer, and the design layer in this order, in a thickness direction, was obtained.

(Production of exterior member)

As a base body, a non-combustible plate (fiber-reinforced cementitious plate) having a thickness 10 mm wherein an epoxy resin sealer treatment was applied to a transfer surface was prepared. Then, a hot melt adhesive was applied to the surface of the transfer sheet obtained above on the design layer side and dried. The surface of the base body on which the epoxy resin sealer treatment was applied and the surface of the transfer sheet wherein the adhesive was applied were opposed to each other and laminated. A laminator was used to heat and pressurize the laminate from the transfer sheet side at a lamination roll temperature of 170°C. and a conveyance speed 2 m/min, and the laminate was brought into close contact. The releasing film was peeled from the adhered transfer sheet to obtain an exterior member.

[Comparative Example 1]

One surface of the above releasing film 3 was coated with the above composition 2 for forming a first protective layer so as the coating amount after drying was 5 g/m$^2$, and dried. Then, an electron beam (pressurized voltage: 90 kV, 5 Mrad (50 kGy)) was irradiated to form a first protective layer with a thickness of 5 $\mu$m.
Then, after subjecting the surface of the obtained first protective layer to a corona discharge treatment, the following composition 4 for forming a second protective layer was applied, dried, and a second protective layer with a thickness of 5 $\mu$m was formed.

<Composition 4 for forming second protective layer>

- Acrylic polyol: 100 parts by mass
- Hydroxyphenyltriazine based ultraviolet absorber: 17 parts by mass (product name: TINUVIN400 from BASF)
- Hydroxyphenyltriazine based ultraviolet absorber: 13 parts by mass (product name: TINUVIN479 from BASF)

- Hindered amine based light stabilizer: 8 parts by mass (product name: TINUVIN123, from BASF)
- Anti-blocking agent: 9 parts by mass (silica particles, average particle size of 3 μm)
- Curing agent: 25 parts by mass (hexamethylene diisocyanate)

Then, the surface of the obtained second protective layer was coated with the above ink composition 1 including a resin component and a pigment by gravure coating, dried, and a design layer with a thickness of 3 to 5 μm, including a pattern layer and a solid layer, was formed. The surface of the obtained design layer was coated with the adhesive composition 1 including an acrylic resin and a vinyl chloride-vinyl acetate copolymer at 6:4 (mass ratio) by gravure coating, dried, and an adhesive layer with a thickness of 2 μm was formed. Thereby, a transfer sheet including the releasing film, the first protective layer, the second protective layer, the design layer, and the adhesive layer in this order, in a thickness direction, was obtained.

[Comparative Example 2]

The following composition 4 for forming a first protective layer was applied on one surface of a releasing film 1 (mirror surface PET film E5001 from Toyobo Co., Ltd.) so as the coating amount after drying was 5 g/m$^2$, and dried. Then, an electron beam (pressurized voltage: 90 kV, 5 Mrad (50 kGy)) was irradiated to form a first protective layer with a thickness of 5 μm.

<Composition 4 for forming first protective layer>

- Ionizing radiation curable resin composition: 100 parts by mass
  (Caprolactone based urethane acrylate: 100 parts by mass)
- Hydroxyphenyltriazine based ultraviolet absorber: 2 parts by mass (product name: TINUVIN479 from BASF)
- Light stabilizer including a reactive functional group: 2 parts by mass (Product name: Sanol LS-3410, from Nippon Nyukazail Co., Ltd.)

Then, after subjecting the surface of the obtained first protective layer to a corona discharge treatment, the above composition 1 for forming a second protective layer was applied, dried, and a second protective layer with a thickness of 5 μm was formed.

Then, the surface of the obtained second protective layer was coated with the above ink composition 1 including a resin component and a pigment by gravure coating, dried, and a design layer with a thickness of 3 to 5 μm, including a pattern layer and a solid layer, was formed. The surface of the obtained design layer was coated with the adhesive composition 1 including an acrylic resin and a vinyl chloride-vinyl acetate copolymer at 6:4 (mass ratio) by gravure coating, dried, and an adhesive layer with a thickness of 2 μm was formed. Thereby, a transfer sheet including the releasing film, the first protective layer, the second protective layer, the design layer, and the adhesive layer in this order, in a thickness direction, was obtained.

[Measurement of indentation hardness]

For the first protective layer, the second protective layer and the heat sealing layer (Example 1) or the design layer (Examples 2 to 4, Comparative Example 1 and Comparative Example 2) of the transfer sheet obtained in Examples 1 to 4, Comparative Example 1 and Comparative Example 2, the indentation hardness was measured by the method described above. The results are shown in Table 1.

For the first protective layer, the second protective layer and the heat sealing layer or the design layer of the exterior member obtained in Example 5 and Example 6, the indentation hardness was measured by the method described above. The results are shown in Table 1.

Incidentally, the indentation hardness in Example 6 corresponds the indentation hardness of the first protective layer, the second protective layer and the design layer in the exterior member wherein an acrylic plate of a thickness 2 mm ("Comoglas" from Kuraray Co., Ltd.) was used as a base body instead of the incombustible plate.

[Evaluation of close adhesiveness (initial)]

Adhesive layer (design layer) side surface of the transfer sheets obtained in Examples 1 to 4, Comparative Example 1 and Comparative Example 2 were opposed to one surface of a base body (acrylic plate with a thickness 2 mm ("Comoglas" from Kuraray Co., Ltd.)) and laminated. A laminator was used to heat and pressurize the laminate from the transfer sheet side at a lamination roll temperature of 170°C. and a conveyance speed 2 m/min, and the laminate was brought into close contact. The releasing film was peeled off from the adhered transfer sheet to obtain an exterior member as an evaluation member. The exterior members obtained in Example 5 and Example 6 were used as evaluation members as they were.

Adhesive tape ("Cellopape (registered trademark)" from NICHIBAN Co., Ltd.) was stuck with a 2.5 cm × 2.5 cm area so as to protrude 5 cm from the end of the evaluation member. Thereafter, the protruding portion of the adhesive tape was pinched, by peeling the adhesive tape in a direction of 45° with respect to the surface of the evaluation member, to confirm the close adhesiveness between the layers of the transfer layer, the initial close adhesiveness was evaluated by the following evaluation criteria. The evaluation results are shown in Table 1.

<Evaluation criteria>

A: no delamination occurred between the layers of the transfer layer
B: delamination occurred between the layers of the transfer layer

[Evaluation of weather resistant close adhesiveness]

An accelerated weathering test using a metal halide lamp (MWOM) was carried out to the above evaluation members for 700 hours (a test repeating a cycle of: irradiated with ultraviolet rays for 20 hours under the following irradiation conditions, and then, a dew condensation was carried out for 4 hours under the following dew condensation conditions), and the weather resistant close adhesiveness was evaluated as follows. The evaluation results are shown in Table 1.

<Conditions for accelerated weathering test>

(Testing device)
Product name "Daipla MetalWeather" from Daipla Wintes Co., Ltd.
(Irradiation conditions)
Illuminance: 65 mW/cm$^2$, Black panel temperature: 63 °C, Bath humidity: 50 %RH, Time: 20 hours
(Dew condensation conditions)
Illuminance: 0 mW/cm$^2$, Bath humidity: 98 %RH, Time: 4 hours

Adhesive tape ("Cellopape (registered trademark)" from NICHIBAN Co., Ltd.) was stuck with a 2.5 cm × 2.5 cm area so as to protrude 5 cm from the end of the evaluation member wherein the accelerated weathering test was performed. Thereafter, the protruding portion of the adhesive tape was pinched, by peeling the adhesive tape in a direction of 45° with respect to the surface of the evaluation member, to confirm the weather resistant close adhesiveness between the layers of the transfer layer, the adhesiveness was evaluated by the following evaluation criteria. The evaluation results are shown in Table 1.

<Evaluation criteria>

A: no delamination occurred between the layers of the transfer layer
B: delamination occurred between the layers of the transfer layer

[Evaluation of scratch resistance]

For the evaluation members described above, using steel wool (Bonstar, #0000), a load of 300 g/cm$^2$ was applied onto the first protective layer side surface for 5 strokes, and the condition of the surface was checked. The scratch resistance was evaluated by the following evaluation criteria. The evaluation results are shown in Table 1.

EP 4 674 615 A1

<Evaluation criteria>

A: almost no apparance change was confirmed

B: remarkable scratches and change in glaze were confirmed

| | | Example 1 | Example 2 | Example 3 | Example 4 | Example 5 | Example 6 | Co-Ex. 1 | Co-Ex. 2 |
|---|---|---|---|---|---|---|---|---|---|
| Indentation hardness* [MPa] | First layer | 223 | 253 | 198 | 253 | 219 | 240 | 249 | 18 |
| | Second layer | 13 | 13 | 8 | 4 | 16 | 29 | 114 | 14 |
| | HS layer or design layer | 224 | 146 | 130 | 149 | 241 | 163 | 155 | 146 |
| Close adhesiveness | Initial | A | A | A | A | A | A | B | A |
| | After weathering test | A | A | A | A | A | A | B | A |
| Scratch resistance | | A | A | A | A | A | A | A | B |

(* Indentation hardness is a measured value of each layer in the transfer sheet in Examples 1-4, Comparative Example 1 and Comparative Example 2, or the measured value of each layer in transferred article (exterior member) in Example 5 and Example 6.)

As shown in Table 1, it is confirmed that the transfer sheets of Examples 1 to 4 can transfer a transfer layer having excellent scratch resistance and good weather resistant close adhesiveness between the first protective layer and the second protective layer. Similarly, according to the exterior members of Example 5 and Example 6, it is confirmed that the weather resistant close adhesiveness of the first protective layer and the second protective layer is good, and the scratch resistance is excellent.

On the other hand, in the transfer sheet of Comparative Example 1, since the indentation hardness of the second layer is too high, it is confirmed that the initial close adhesiveness and the weather resistant close adhesiveness are inferior. In addition, in the transfer sheet of Comparative Example 2, since the indentation hardness of the first layer is too low, it is confirmed that scratch resistance is inferior.

As described above, in the present disclosure, for Example, the following inventions are provided.

[1] A transfer sheet used for producing an exterior member, the transfer sheet comprising:

a releasing film, and a transfer layer disposed on one surface of the releasing film, wherein the transfer layer includes a first protective layer and a second protective layer, in this order from the releasing film side, in a thickness direction; the first protective layer includes a cured product of a first curable resin composition, and a weather resistant agent; the second protective layer includes a cured product of a second curable resin composition, and a weather resistant agent; the cured product of the first curable resin composition and the cured product of the second curable resin composition respectively include a (meth)acrylic component, and a urethane component; and when a cross-sectional sample piece of the transfer sheet is prepared using a resin embedding method and a microtome, an indentation hardness at a cross-section of the first protective layer is 150 MPa or more and 300 MPa or less, and an indentation hardness at a cross-section of the second protective layer is 2 MPa or more and 50 MPa or less.

[2] The transfer sheet according to [1], wherein the first curable resin composition is an ionizing radiation curable resin composition.

[3] The transfer sheet according to [1] or [2], wherein the first curable resin composition is an electron beam curable resin composition.

[4] The transfer sheet according to any one of [1] to [3], wherein the first curable resin composition includes a urethane (meth)acrylate.

[5] The transfer sheet according to any one of [1] to [4], wherein the second curable resin composition is a thermosetting resin composition.

[6] The transfer sheet according to any one of [1] to [5], wherein the second curable resin composition includes a urethane (meth)acrylic based resin.

[7] The transfer sheet according to any one of [1] to [6], wherein the second curable resin composition is a thermosetting resin composition including a polycarbonate based urethane (meth)acrylic copolymer.

[8] The transfer sheet according to any one of [1] to [7], wherein the first protective layer includes at least one of an ultraviolet absorber and a light stabilizer as the weather resistant agent.

[9] The transfer sheet according to any one of [1] to [8], wherein the first protective layer includes a triazine based ultraviolet absorber as the weather resistant agent.

[10] The transfer sheet according to any one of [1] to [9], wherein the second protective layer includes at least one of an ultraviolet absorber and a light stabilizer as the weather resistant agent.

[11] The transfer sheet according to any one of [1] to [10], wherein the second protective layer includes a triazine based ultraviolet absorber as the weather resistant agent.

[12] The transfer sheet according to any one of [1] to [11], wherein an adhesive layer is included on a surface of the second protective layer that is opposite to the first protective layer.

[13] The transfer sheet according to [12], wherein the adhesive layer includes a colorant.

[14] The transfer sheet according to [12] or [13], wherein an indentation hardness of a cross-section of the adhesive layer is 100 MPa or more and 300 MPa or less.

[15] The transfer sheet according to any one of [1] to [14], wherein a design layer is included on a surface of the second protective layer that is opposite side to the first protective layer.

[16] The transfer sheet according to [15], wherein an adhesive layer is included on a surface of the design layer that is opposite side to the second protective layer.

[17] A method for producing the transfer sheet according to any one of [1] to [16], the method comprising:

a first protective layer forming step of forming the first protective layer by coating a surface of the releasing film with a first composition including the first curable resin composition and the weather resistant agent, and curing; and a second protective layer forming step of forming the second protective layer by coating a surface of the first protective layer that is opposite side to the releasing film with a second composition including the second curable resin composition and the weather resistant agent, and curing.

[18] A method for producing an exterior member, the method comprising:

a preparing step of preparing the transfer sheet according to any one of [1] to [16]; and a close adhering step of facing the second protective layer side surface of the transfer sheet and a base body, and closely adhering the two.

[19] An exterior member comprising a first protective layer, a second protective layer, an adhesive layer and a base body, in this order in a thickness direction, wherein

the first protective layer includes a cured product of a first curable resin composition, and a weather resistant agent; the second protective layer includes a cured product of a second curable resin composition, and a weather resistant agent; the cured product of the first curable resin composition and the cured product of the second curable resin composition respectively include a (meth)acrylic component, and a urethane component; and when a cross-sectional sample piece of the exterior member is prepared using a resin embedding method and a microtome, an indentation hardness at a cross-section of the first protective layer is 150 MPa or more and 300 MPa or less, and an indentation hardness at a cross-section of the second protective layer is 2 MPa or more and 50 MPa or less.

[20] The exterior member according to [19], wherein the base body is an acrylic plate, a polycarbonate plate, a non-flammable plate, a metal plate, a vinyl chloride plate, a melamine plate, or a carbon fiber reinforced plastic plate.

Reference Signs List

1: releasing film
2: first protective layer
3: second protective layer
4: adhesive layer
5: design layer
10: transfer sheet
20: base body
100: exterior member

**Claims**

1. A transfer sheet used for producing an exterior member, the transfer sheet comprising:

a releasing film, and a transfer layer disposed on one surface of the releasing film, wherein the transfer layer includes a first protective layer and a second protective layer, in this order from the releasing film side, in a thickness direction; the first protective layer includes a cured product of a first curable resin composition, and a weather resistant agent; the second protective layer includes a cured product of a second curable resin composition, and a weather resistant agent; the cured product of the first curable resin composition and the cured product of the second curable resin composition respectively include a (meth)acrylic component, and a urethane component; and

when a cross-sectional sample piece of the transfer sheet is prepared using a resin embedding method and a microtome,

an indentation hardness at a cross-section of the first protective layer is 150 MPa or more and 300 MPa or less, and

an indentation hardness at a cross-section of the second protective layer is 2 MPa or more and 50 MPa or less.

2. The transfer sheet according to claim 1,
   wherein the first curable resin composition is an ionizing radiation curable resin composition.

3. The transfer sheet according to claim 1,
   wherein the first curable resin composition is an electron beam curable resin composition.

4. The transfer sheet according to claim 1,
   wherein the first curable resin composition includes a urethane (meth)acrylate.

5. The transfer sheet according to claim 1,
   wherein the second curable resin composition is a thermosetting resin composition.

6. The transfer sheet according to claim 1,
   wherein the second curable resin composition includes a urethane (meth)acrylic based resin.

7. The transfer sheet according to claim 1,
   wherein the second curable resin composition is a thermosetting resin composition including a polycarbonate based urethane (meth)acrylic copolymer.

8. The transfer sheet according to claim 1,
   wherein the first protective layer includes at least one of an ultraviolet absorber and a light stabilizer as the weather resistant agent.

9. The transfer sheet according to claim 1,
   wherein the first protective layer includes a triazine based ultraviolet absorber as the weather resistant agent.

10. The transfer sheet according to claim 1,
    wherein the second protective layer includes at least one of an ultraviolet absorber and a light stabilizer as the weather resistant agent.

11. The transfer sheet according to claim 1,
    wherein the second protective layer includes a triazine based ultraviolet absorber as the weather resistant agent.

12. The transfer sheet according to claim 1,
    wherein an adhesive layer is included on a surface of the second protective layer that is opposite to the first protective layer.

13. The transfer sheet according to claim 12,
    wherein the adhesive layer includes a colorant.

14. The transfer sheet according to claim 12,
    wherein an indentation hardness of a cross-section of the adhesive layer is 100 MPa or more and 300 MPa or less.

15. The transfer sheet according to claim 1,
    wherein a design layer is included on a surface of the second protective layer that is opposite side to the first protective layer.

16. The transfer sheet according to claim 15,
    wherein an adhesive layer is included on a surface of the design layer that is opposite side to the second protective layer.

17. A method for producing the transfer sheet according to any one of claims 1 to 16, the method comprising:

a first protective layer forming step of forming the first protective layer by coating a surface of the releasing film with a first composition including the first curable resin composition and the weather resistant agent, and curing; and a second protective layer forming step of forming the second protective layer by coating a surface of the first protective layer that is opposite side to the releasing film with a second composition including the second curable resin composition and the weather resistant agent, and curing.

18. A method for producing an exterior member, the method comprising:

a preparing step of preparing the transfer sheet according to any one of claims 1 to 16; and a close adhering step of facing the second protective layer side surface of the transfer sheet and a base body, and closely adhering the two.

19. An exterior member comprising a first protective layer, a second protective layer, an adhesive layer and a base body, in this order in a thickness direction, wherein

the first protective layer includes a cured product of a first curable resin composition, and a weather resistant agent;
the second protective layer includes a cured product of a second curable resin composition, and a weather resistant agent;
the cured product of the first curable resin composition and the cured product of the second curable resin composition respectively include a (meth)acrylic component, and a urethane component; and
when a cross-sectional sample piece of the exterior member is prepared using a resin embedding method and a microtome,
an indentation hardness at a cross-section of the first protective layer is 150 MPa or more and 300 MPa or less, and
an indentation hardness at a cross-section of the second protective layer is 2 MPa or more and 50 MPa or less.

20. The exterior member according to claim 19,
wherein the base body is an acrylic plate, a polycarbonate plate, a non-flammable plate, a metal plate, a vinyl chloride plate, a melamine plate, or a carbon fiber reinforced plastic plate.

FIG. 1

(a)

(b)

(c)

(d)

FIG. 2

(a)

(b)

(c)

FIG. 3

(a)

10

1
2
3
4

$D_T$

(b)

1
2
3
4
} 10

20

$D_T$

(c)

100

2
3
4

20

$D_T$

FIG. 4

(a)

(b)

## INTERNATIONAL SEARCH REPORT

| International application No. |
|---|
| **PCT/JP2024/006543** |

**A. CLASSIFICATION OF SUBJECT MATTER**

***B32B 7/022***(2019.01)i; ***B32B 27/30***(2006.01)i; ***B32B 27/40***(2006.01)i; ***B44C 1/17***(2006.01)i
FI:  B32B7/022; B32B27/30 A; B32B27/40; B44C1/17 B

According to International Patent Classification (IPC) or to both national classification and IPC

**B. FIELDS SEARCHED**

Minimum documentation searched (classification system followed by classification symbols)

B32B1/00-43/00; B44C1/17

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-160289 A (DAI NIPPON PRINTING CO., LTD.) 11 October 2021 (2021-10-11) entire text | 1-20 |
| A | JP 2020-38246 A (DAI NIPPON PRINTING CO., LTD.) 12 March 2020 (2020-03-12) entire text | 1-20 |
| A | JP 2016-68007 A (DAI NIPPON PRINTING CO., LTD.) 09 May 2016 (2016-05-09) entire text | 1-20 |
| A | JP 2018-140632 A (DAI NIPPON PRINTING CO., LTD.) 13 September 2018 (2018-09-13) entire text | 1-20 |
| A | JP 2011-189579 A (DAI NIPPON PRINTING CO., LTD.) 29 September 2011 (2011-09-29) entire text | 1-20 |
| A | JP 2016-68362 A (DAI NIPPON PRINTING CO., LTD.) 09 May 2016 (2016-05-09) entire text | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 March 2024** | **02 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/006543**

| Patent document cited in search report | | | Publication date (day/month/year) | Patent family member(s) | | Publication date (day/month/year) |
|---|---|---|---|---|---|---|
| JP | 2021-160289 | A | 11 October 2021 | (Family: none) | | |
| JP | 2020-38246 | A | 12 March 2020 | (Family: none) | | |
| JP | 2016-68007 | A | 09 May 2016 | (Family: none) | | |
| JP | 2018-140632 | A | 13 September 2018 | WO 2018/159684 | A1 | |
| JP | 2011-189579 | A | 29 September 2011 | (Family: none) | | |
| JP | 2016-68362 | A | 09 May 2016 | (Family: none) | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016120643 A
- JP 2022149930 A